# EUROPEAN PATENT APPLICATION

(11) **EP 4 848 783 A1**
(43) Date of publication of application: **02.12.2026**
(21) Application number: 25751215.2
(22) Date of filing: 21.01.2025
(51) Int. Cl.: H04W 24/02

(54) **COMMUNICATION METHOD, APPARATUS AND SYSTEM, AND READABLE STORAGE MEDIUM AND PROGRAM PRODUCT**

(30) Priority: 08.02.2024 CN 202410178315
(71) Applicant: HUAWEI TECHNOLOGIES CO., LTD., Shenzhen, Guangdong 518129 (CN)
(72) Inventor: LI, Kuikui, Shenzhen, Guangdong 518129 (CN)
(74) Representative: Huawei European IPR
(86) International application number: PCT/CN2025/073788
(87) International publication number: WO 2025/167613

(57) **Abstract**

A communication method, apparatus, and system, a readable storage medium, and a program product are provided. The communication method includes: receiving a first target policy and/or a second target policy and a first identifier from a first function entity, where the first target policy indicates a communication function split manner of a first target entity and a second target entity, and the second target policy indicates a communication function split manner of the second target entity and a third target entity; and sending, based on an association relationship between the first identifier and a second identifier, the first target policy and/or the second target policy to a second function entity indicated by the second identifier, where the second function entity includes at least one of the first target entity, the second target entity, and the third target entity. In embodiments of this application, in a process of configuring corresponding target policies for different function entities, isolation between the first function entity and the second function entity is implemented based on a correspondence between a real identifier and a virtual identifier, thereby improving network security.

## Description

This application claims priority to Chinese Patent Application No. 202410178315.9, filed with the China National Intellectual Property Administration on February 8, 2024 and entitled "COMMUNICATION METHOD, APPARATUS, AND SYSTEM, READABLE STORAGE MEDIUM, AND PROGRAM PRODUCT", which is incorporated herein by reference in its entirety.

### TECHNICAL FIELD

This application relates to the communication field, and in particular, to a communication method, apparatus, and system, a computer-readable storage medium, and a computer program product.

### BACKGROUND

A 4th generation (4th generation, 4G) mobile network base station is split into two parts: a baseband unit (baseband Unit, BBU) and a remote radio unit (remote radio unit, RRU) for deployment in a lower-layer split manner. A 5th generation (5th generation, 5G) mobile network base station is split into two function entities: a central unit (central unit, CU) and a distributed unit (distributed unit, DU) in a higher-layer split manner.

Currently, function split of the 5G base station has poor adaptability. Therefore, a solution with better performance is urgently needed.

### SUMMARY

This application provides a communication method, apparatus, and system, a computer-readable storage medium, and a computer program product. In a process of configuring corresponding target policies for different function entities, isolation between the different function entities is implemented based on a correspondence between a real identifier and a virtual identifier, thereby improving network security.

To achieve the foregoing objectives, this application uses the following technical solutions.

According to a first aspect, a communication method is provided. The method may be applied to a third function entity side, for example, a third function entity or a component (for example, a circuit, a chip, or a chip system) in the third function entity. The method may include: receiving a first target policy and/or a second target policy and a first identifier from a first function entity, where the first target policy indicates a communication function split manner of a first target entity and a second target entity, and the second target policy indicates a communication function split manner of the second target entity and a third target entity; and sending, based on an association relationship between the first identifier and a second identifier, the first target policy and/or the second target policy to a second function entity indicated by the second identifier, where the second function entity includes at least one of the first target entity, the second target entity, and the third target entity.

In this application, in a process of configuring corresponding target policies for different function entities, isolation between the first function entity and the second function entity is implemented based on a correspondence between a real identifier and a virtual identifier, thereby improving network security.

In a possible design, before receiving the first target policy and/or the second target policy from the first function entity, the method further includes: obtaining the second identifier and first information corresponding to the second identifier; mapping the second identifier to the first identifier based on the association relationship between the second identifier and the first identifier; and sending the first identifier and the first information to the first function entity, where the first information includes at least one of the following: second information corresponding to communication interfaces, where the second information indicates a network communication status corresponding to the communication interface, the communication interfaces include a first interface and a second interface, the first interface is a communication interface between the first target entity and the second target entity, and the second interface is a communication interface between the second target entity and the third target entity; third information corresponding to the second function entity, where the third information indicates a processing resource status corresponding to the second function entity; or fourth information, where the fourth information indicates a quality of service (quality of service, QoS) requirement corresponding to at least one service.

In this application, when the first function entity comprehensively determines a target policy based on dimensions such as a network communication status of a communication interface, a processing resource status of a function entity, and a QoS requirement of a service, the first function entity cannot learn of a real second function entity, thereby ensuring security of information corresponding to the second function entity.

In a possible design, the method further includes: assigning the first identifier associated with the second identifier.

In this application, the third function entity may assign, to the second identifier, the first identifier associated with the second identifier, so that the first identifier can be configured more flexibly.

In a possible design, the second identifier is from at least one second function entity.

In this application, the second identifier of the at least one second function entity is obtained, so that the third function entity configures the corresponding first identifier for the second identifier, thereby ensuring security of information related to the second function entity.

In a possible design, the first target policy and/or the second target policy correspond/corresponds to any one of different terminals; the first target policy and/or the second target policy correspond/corresponds to any one of different protocol data unit (protocol data unit, PDU) sessions; the first target policy and/or the second target policy correspond/corresponds to any one of different QoS flows; the first target policy and/or the second target policy correspond/corresponds to any one of different data radio bearers (data radio bearer, DRB); or the first target policy and/or the second target policy correspond/corresponds to any one of different data packets.

In this application, target policies at different granularities may be determined, so that a communication function can be flexibly adjusted at a corresponding granularity.

In a possible design, the method further includes: receiving at least one candidate function split manner and/or fifth information, where the fifth information indicates a communication function configured for each second function entity corresponding to the candidate function split manner; and sending the at least one candidate function split manner and/or the fifth information to the second function entity.

In this application, a plurality of candidate function split manners and/or corresponding communication functions may be further notified to the second function entity in advance, so that only some information needs to be indicated when a target policy is indicated, thereby reducing resource overheads in a communication process.

In a possible design, communication with different second function entities is performed through transmission transparent to an intermediate node.

Through transmission transparent to the intermediate node, any second function entity cannot learn of information related to another second function entity, thereby ensuring security of information between the different second function entities.

In a possible design, the method is applied to the third function entity, and the third function entity, the first function entity, and the second function entity are function entities independently of each other; or the third function entity is integrated into the second function entity.

This application provides a plurality of deployment manners of the third function entity, to be applicable to a plurality of possible network architectures. In this way, when network functions including a radio access network (radio access network, RAN) function are flexibly split, security of communication between different function entities can be ensured in the plurality of network architectures.

In a possible design, the third function entity is communicatively connected to the at least one second function entity.

In this application, in a scenario in which the third function entity is independent of the first function entity and the second function entity, the third function entity may be communicatively connected to one or more second function entities, and a quantity of third function entities and a manner of a connection to the second function entity may be dynamically selected in different scenarios. In this way, in a plurality of scenarios, isolation between the first function entity and the second function entity can be ensured, thereby ensuring data transmission security.

In a possible design, the second function entity is a function entity in a wireless local area network RAN, a core network, or a network management domain.

In this application, a plurality of communication functions such as the radio access network, the core network, and the network management domain may be dynamically split, thereby improving universality.

In a possible design, the second function entity is the function entity in the RAN, and the second function entity includes at least one of the following function entities: a CU, a DU, or a radio unit (radio unit, RU).

In this application, flexible adjustment of communication functions of a plurality of function entities such as the CU, the DU, and the RU in the RAN is implemented, to adapt to quality of service requirements of different services, improve bandwidth utilization and compute resource utilization, and reduce deployment costs of different function entities in the RAN.

In a possible design, the method is applied to a CU, and the second function entity includes a DU and/or an RU; the method is applied to a DU, and the second function entity includes a CU and/or an RU; or the method is applied to an RU, and the second function entity includes a CU and/or a DU.

This application may be further applied to a function entity in a RAN, without the need to independently deploy an independent network element, thereby reducing deployment costs, and is applicable to more network architectures, thereby improving universality.

In a possible design, the communication function split manner includes a manner of splitting a set including at least one of the following communication functions: a communication function corresponding to a RAN protocol layer, a communication function corresponding to one or more network elements in a core network, or a communication function corresponding to at least one network management entity.

In this application, a plurality of communication functions may be flexibly split, so that different function entities configure different communication functions, to adapt to quality of service requirements of different services in different scenarios.

In a possible design, the second information includes at least one of the following parameters: a bandwidth resource of the communication interface, a transmission delay of the communication interface, a packet loss rate of the communication interface, or reliability of the communication interface.

This application provides a plurality of possible parameters included in the second information, so that the first function entity determines an appropriate target policy based on the parameters in the second information.

In a possible design, the third information includes at least one of the following parameters: processor utilization, memory utilization, or disk utilization.

This application provides a plurality of possible parameters included in the third information, so that the first function entity determines an appropriate target policy based on the parameters in the third information.

In a possible design, the fourth information includes at least one of the following parameters: a packet delay budget (packet delay budget, PDB), a guaranteed bit rate (guaranteed bit rate, GBR), or a packet error rate (packet error rate, PER).

This application provides a plurality of possible parameters included in the fourth information, so that the first function entity determines an appropriate target policy based on the parameters in the fourth information, to meet a plurality of possible QoS requirements.

In a possible design, the communication function includes at least one of the following states: an active state or an inactive state.

In this application, a communication function that needs to be performed may be flexibly selected based on the active state or the inactive state.

According to a second aspect, a communication system is provided, and includes a first function entity and a third function entity. The first function entity is configured to send a first target policy and/or a second target policy and a first identifier to the third function entity, where the first target policy indicates a communication function split manner of a first target entity and a second target entity, and the second target policy indicates a communication function split manner of the second target entity and a third target entity. The third function entity is configured to send, based on an association relationship between the first identifier and a second identifier, the first target policy and/or the second target policy to a second function entity indicated by the second identifier, where the second function entity includes at least one of the first target entity, the second target entity, and the third target entity.

In this application, in a process of configuring corresponding target policies for different function entities, isolation between the first function entity and the second function entity is implemented based on a correspondence between a real identifier and a virtual identifier, thereby improving network security.

In a possible design, the system further includes the second function entity. The second function entity is configured to send the second identifier and first information corresponding to the second identifier to the third function entity; the third function entity is further configured to map the second identifier to the first identifier based on the association relationship between the second identifier and the first identifier; and the third function entity sends the first identifier and the first information to the first function entity, where the first information includes at least one of the following: second information corresponding to communication interfaces, where the second information indicates a network communication status corresponding to the communication interface, the communication interfaces include a first interface and a second interface, the first interface is a communication interface between the first target entity and the second target entity, and the second interface is a communication interface between the second target entity and the third target entity; third information corresponding to the second function entity, where the third information indicates a processing resource status corresponding to the second function entity; or fourth information, where the fourth information indicates a quality of service QoS requirement corresponding to at least one service.

In a possible design, the third function entity is further configured to assign the first identifier associated with the second identifier.

In a possible design, the second identifier is from at least one second function entity.

In a possible design, the first target policy and/or the second target policy correspond/corresponds to any one of different terminals; the first target policy and/or the second target policy correspond/corresponds to any one of different protocol data unit PDU sessions; the first target policy and/or the second target policy correspond/corresponds to any one of different QoS flows; the first target policy and/or the second target policy correspond/corresponds to any one of different data radio bearers DRBs; or the first target policy and/or the second target policy correspond/corresponds to any one of different data packets.

In a possible design, the first function entity is further configured to send at least one candidate function split manner and/or fifth information to the third function entity, where the fifth information indicates a communication function configured for each second function entity corresponding to the candidate function split manner; and the third function entity is further configured to send the at least one candidate function split manner and/or the fifth information to the second function entity.

In a possible design, the third function entity communicates with different second function entities through transmission transparent to an intermediate node.

In a possible design, the third function entity, the first function entity, and the second function entity are function entities that are independent of each other; or the third function entity is integrated into the second function entity.

In a possible design, the third function entity is communicatively connected to the at least one second function entity.

In a possible design, the second function entity is a function entity in a RAN, a core network, or a network management domain.

In a possible design, the second function entity is the function entity in the RAN, and the second function entity includes at least one of the following function entities: a CU, a DU, or an RU.

In a possible design, the third function entity is a CU, and the second function entity includes a DU and/or an RU; the third function entity is a DU, and the second function entity includes a CU and/or an RU; or the third function entity is an RU, and the second function entity includes a CU and/or a DU.

In a possible design, the communication function split manner includes a manner of splitting a set including at least one of the following communication functions: a communication function corresponding to a RAN protocol layer, a communication function corresponding to one or more network elements in a core network, or a communication function corresponding to at least one network management entity.

In a possible design, the second information includes at least one of the following parameters: a bandwidth resource of the communication interface, a transmission delay of the communication interface, a packet loss rate of the communication interface, or reliability of the communication interface.

In a possible design, the third information includes at least one of the following parameters: processor utilization, memory utilization, or disk utilization.

In a possible design, the fourth information includes at least one of the following parameters: a PDB, a GBR, or a PER.

In a possible design, the communication function includes at least one of the following states: an active state or an inactive state.

According to a third aspect, a communication apparatus is provided. The communication apparatus is configured to implement various communication methods in the first aspect. The communication apparatus includes a corresponding module, unit, or means (means) for implementing the foregoing communication method. The module, unit, or means may be implemented by hardware, software, or hardware executing corresponding software. The hardware or the software includes one or more modules or units corresponding to the foregoing functions.

According to a fourth aspect, a communication apparatus is provided. The communication apparatus includes at least one processor, configured to support the communication apparatus in implementing the function in any one of the foregoing aspects.

In a possible design, the communication apparatus further includes a memory, and the memory is configured to store program instructions and/or data necessary for the communication apparatus.

In a possible design, the communication apparatus further includes a communication interface. The communication interface is configured to: receive and/or send a signal, or the communication interface is configured to perform communication between the processor and another apparatus or component.

According to a fifth aspect, a communication apparatus is provided, and includes at least one processor and a communication interface. The communication interface is configured to: receive and/or send a signal, and the processor is configured to enable the communication method according to any one of the foregoing aspects to be performed.

According to a sixth aspect, a communication apparatus is provided. The communication apparatus includes at least one processor and a memory. The memory is configured to store computer instructions, and when the processor executes the instructions, the communication apparatus is enabled to perform the communication method according to any one of the foregoing aspects.

According to a seventh aspect, a chip system is provided. The chip system includes a processor and an input/output port. The processor is configured to implement a processing function related to the communication method according to any one of the foregoing aspects, and the input/output port is configured to implement a transceiver function related to the communication method according to any one of the foregoing aspects.

In a possible design, the chip system further includes a memory, and the memory is configured to store program instructions and data for implementing a function related to the communication method according to any one of the foregoing aspects.

The chip system may include a chip, or may include a chip and another discrete component.

According to an eighth aspect, a computer-readable storage medium is provided. The computer-readable storage medium stores computer instructions. When the computer instructions are run on a computer, the computer is enabled to perform the communication method according to any design in any one of the foregoing aspects.

According to a ninth aspect, a computer program product is provided. The computer program product includes a computer program or instructions. When the computer program or the instructions are run on a computer, the computer is enabled to perform the communication method according to any design in any one of the foregoing aspects.

### BRIEF DESCRIPTION OF DRAWINGS

FIG. 1 is an example diagram of an architecture of a communication system according to an embodiment of this application;
FIG. 2 is a diagram of an architecture of a 5G radio access network according to an embodiment of this application;
FIG. 3 is a diagram of function split of an access network device according to an embodiment of this application;
FIG. 4 is a diagram of a communication scenario according to an embodiment of this application;
FIG. 5 is a diagram of a communication method according to an embodiment of this application;
FIG. 6 is a diagram of a candidate function split manner according to an embodiment of this application;
FIG. 7 is a diagram of another candidate function split manner according to an embodiment of this application;
FIG. 8 is a diagram of still another candidate function split manner according to an embodiment of this application;
FIG. 9 is a diagram of a network structure of a third function entity according to an embodiment of this application;
FIG. 10 is a diagram of a network structure of another third function entity according to an embodiment of this application;
FIG. 11 is a diagram of a network structure of still another third function entity according to an embodiment of this application;
FIG. 12 is a diagram of a network structure of yet another third function entity according to an embodiment of this application;
FIG. 13A and FIG. 13B are a diagram of another communication method according to an embodiment of this application;
FIG. 14 is a diagram of still another communication method according to an embodiment of this application;
FIG. 15 is a diagram of a communication apparatus according to an embodiment of this application; and
FIG. 16 is a diagram of another communication apparatus according to an embodiment of this application.

### DESCRIPTION OF EMBODIMENTS

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with the evolution of the network architecture and the emergence of new service scenarios, the technical solutions provided in embodiments of this application are also applicable to similar technical problems.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with the evolution of the network architecture and the emergence of new service scenarios, the technical solutions provided in embodiments of this application are also applicable to similar technical problems.

In the specification and accompanying drawings of embodiments of this application, terms such as "first" and "second" are intended to distinguish between different objects or distinguish between different processing on a same object. Terms such as "first" and "second" may distinguish between same items or similar items with basically same functions and purposes. For example, a first device and a second device are merely intended to distinguish between different devices, and do not limit a sequence thereof. A person skilled in the art may understand that the terms such as "first" and "second" do not limit a quantity or an execution sequence, and the terms such as "first" and "second" do not indicate a definite difference.

"At least one" means one or more, and "a plurality of" means two or more.

In descriptions of embodiments of this application, unless otherwise stated, "/" means an "or" relationship between associated objects, for example, A/B may represent A or B. In embodiments of this application, "and/or" describes only an association relationship between associated objects, and indicates that three relationships may exist. For example, A and/or B may represent three cases: Only A exists, both A and B exist, and only B exists, where A and B may be singular or plural.

In the descriptions of embodiments of this application, "a plurality of" means two or more unless otherwise specified. "At least one of the following items (pieces)" or a similar expression thereof refers to any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, terms "include", "have", and any other variants thereof mentioned in descriptions of embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device.

In embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" mentioned throughout this specification means that particular features, structures, or characteristics related to this embodiment are included in at least one embodiment in embodiments of this application. Therefore, embodiments in the entire specification are not necessarily a same embodiment. In addition, these particular features, structures, or characteristics may be combined in one or more embodiments by using any appropriate manner. It may be understood that sequence numbers of the foregoing processes do not mean execution sequences in embodiments of this application. The execution sequences of the processes should be determined based on functions and internal logic of the processes, and should not constitute any limitation on the implementation processes of embodiments of this application.

It may be understood that, in embodiments of this application, both "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In embodiments of this application, unless otherwise specified, for same or similar parts of embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of embodiments of this application are not intended to limit the protection scope of embodiments of this application.

Collection, storage, use, processing, transmission, provision, disclosure, and the like of personal user information in the technical solutions of embodiments of this application all comply with related laws and regulations, and do not violate public order and good morals. For example, in the technical solutions in embodiments of this application, the personal user information is processed with user authorization. This applies throughout and will not be repeated below.

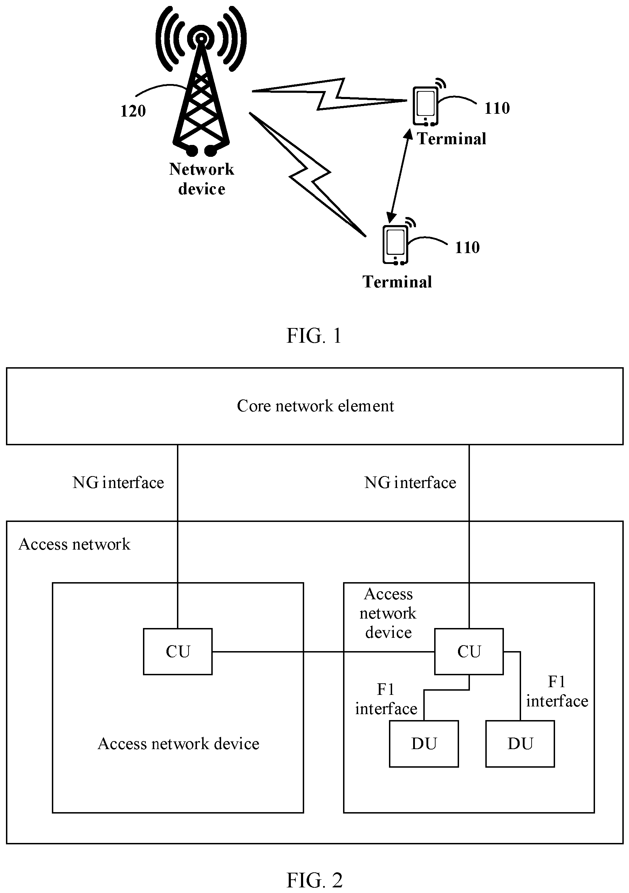

FIG. 1 is an example diagram of an architecture of a communication system according to an embodiment of this application.

As shown in FIG. 1, the communication system in this embodiment of this application may include at least one terminal 110 and a network device 120.

The terminal 110 and the network device 120 communicate with each other in a wireless manner. The network device 120 may be a radio access network device. A wired or wireless manner may be used for a connection between terminals and a connection between radio access network devices. FIG. 1 is merely a diagram. The communication system may further include another network device. For example, the communication system may further include a wireless relay device, a wireless backhaul device, and a core network device, which are not shown in FIG. 1. A connection relationship between devices is not limited to the foregoing enumerated manners.

The radio access network device may be a base station (base station), an evolved NodeB (evolved NodeB, eNodeB), a transmission reception point (transmission reception point, TRP), a next generation NodeB (next generation NodeB, gNodeB/gNB) in a 5G mobile communication system, a next generation base station in a 6th generation (6th generation, 6G) mobile communication system, a base station in a future mobile communication system, an access node in a Wi-Fi system, or the like; or may be a module or a unit that completes some functions of a base station, for example, may be a central unit (central unit, CU) or a distributed unit (distributed unit, DU). The radio access network device may be a macro base station, may be a micro base station or an indoor base station, or may be a relay node, a donor node, or the like. In some other embodiments, alternatively, the radio access network device may be an access network device in an open RAN (open RAN, O-RAN). In the O-RAN, a CU may be referred to as an open CU (open CU, O-CU), a DU may be referred to as an open DU (open DU, O-DU), and a radio unit (radio unit, RU) may be referred to as an open RU (open RU, O-RU). A specific technology and a specific device form that are used by the radio access network device are not limited in embodiments of this application. The radio access network device is sometimes also referred to as a network device briefly. For ease of description, descriptions are provided below by using an example in which the radio access network device is a base station.

The terminal may also be referred to as a terminal device, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, smart office, smart wearable, smart transportation, and a smart city. The terminal device may be a mobile phone, a tablet computer, a computer with a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal device are not limited in embodiments of this application.

The base station and the terminal may be fixed or movable. The base station and the terminal device may be deployed on land, including indoor, outdoor, handheld, or vehicle-mounted forms; or may be deployed on water; or may be deployed on airplanes, balloons, and artificial satellites in the air. Application scenarios of the base station and the terminal device are not limited in embodiments of this application.

Communication between the base station and the terminal, between the base stations, or between the terminals may be performed over a licensed spectrum, or may be performed over an unlicensed spectrum, or may be performed over both the licensed spectrum and the unlicensed spectrum. Communication may be performed over a spectrum below 6 gigahertz (gigahertz, GHz), or may be performed over a spectrum above 6 GHz, or may be performed over both the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in an application scenario of the foregoing terminal device, for example, a smart grid, industrial control, smart transportation, and a smart city. A function of a relay may also be performed by a module (for example, a chip or a modem) in the relay, or may be performed by an apparatus including the function of the relay. A function of the terminal may be performed by a module (for example, a chip or a modem) in the terminal, or may be performed by an apparatus including the function of the terminal.

A wireless communication system includes communication devices, and the communication devices may perform wireless communication through an air interface resource. The communication devices may include a network device and a terminal device, and the network device may also be referred to as a base station device. The air interface resource may include at least one of a time domain resource, a frequency domain resource, a code resource, and a spatial resource. The communication device may also be referred to as a communication apparatus.

The solutions provided in embodiments of this application may be applied to wireless communication between communication devices. The wireless communication may include wireless communication between a network device and a terminal, wireless communication between network devices, and wireless communication between terminals. In embodiments of this application, the term "wireless communication" may also be briefly referred to as "communication", and the term "communication" may also be described as "data transmission", "information transmission", or "transmission".

Embodiments of this application may be applied to possible communication links such as an uplink (uplink, UL), a downlink (downlink, DL), an access link, a backhaul (backhaul) link, and a sidelink (sidelink, SL). This is not limited in embodiments of this application. From the perspective of service scenarios, embodiments of this application are applicable to a plurality of scenarios, for example, an extended reality (extended reality, XR) service, an artificial intelligence (artificial intelligence, AI) service, and a large-capacity scenario. This is not limited in embodiments of this application. The SL may also be referred to as a sidelink, a side link, or the like. This is not limited in embodiments of this application.

A 4G base station may be divided into two parts: a BBU and an RRU. The BBU is connected to one or more RRUs through an optical fiber, metal cabling, or a microwave link. The BBU mainly performs centralized higher-layer processing on baseband signals. The RRU mainly receives and sends a baseband signal, and performs functions such as modulation and demodulation of a radio frequency signal, data processing, and power amplification. When the RRU is closer to an antenna, a feeder loss is smaller. In some cases, the RRU may also be referred to as an RU. In this case, the BBU can process baseband signals in a highly centralized manner. Therefore, compute resources can be deployed in a centralized manner, so that resource utilization is high and deployment costs are low. However, such lower-layer split has a high requirement on bandwidth of the fronthaul (fronthaul) link between the BBU and the RRU, and optical fiber deployment costs are high.

Therefore, to reduce pressure on the bandwidth of the fronthaul link and the deployment costs caused by the lower-layer split manner, in a 3rd generation partnership project (3rd generation partnership project, 3GPP) 5G radio access network, considering that a base station is split into two function entities such as a CU and a DU at a higher layer, a midhaul (midhaul) link between the CU and the DU has a lower requirement on network bandwidth. Therefore, the CU and the DU may be split. A 5G radio access network may also be referred to as a next generation radio access network (next generation radio access network, NG-RAN).

FIG. 2 shows an architecture of a 5G radio access network. For example, the access network device may be a gNB, and the gNB may include two parts: a CU and a DU. Certainly, there may be one or more DUs. This is not limited in embodiments of this application. The gNB may communicate with a 5G core network (5G core network, 5GC) core network element through a next generation (next generation, NG) interface, and different gNBs may communicate with each other through an Xn interface, for example, through an Xn-control (control, C) interface. The CU may communicate with different DUs through F1 interfaces.

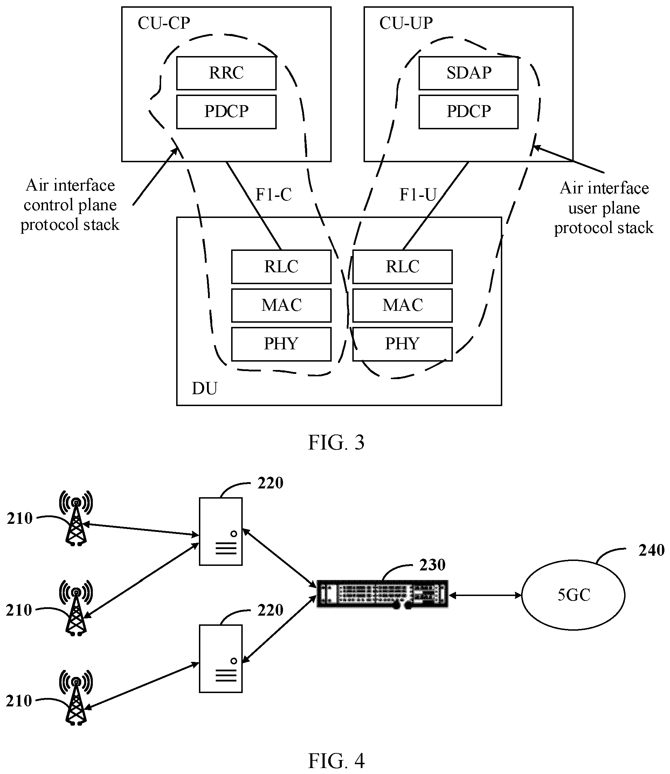

In some examples, function split between the CU and the DU in the 5G access network device is performed in a static split manner, and fixed split is performed at a protocol stack function granularity. As shown in FIG. 3, protocol stacks such as radio link control (radio link control, RLC), media access control (media access control, MAC), and physical layer (physical layer, PHY) may be located in the DU of the access network device. MAC may also be referred to as media access control, medium access control, or the like. This is not limited in embodiments of this application. Protocol stacks such as radio resource control (radio resource control, RRC), service data adaptation protocol (service data adaptation protocol, SDAP), and packet data convergence protocol (packet data convergence protocol, PDCP) may be located in the CU of the access network device. The RRC implements air interface radio resource and air interface connection control, and belongs to a control plane (control plane, CP) protocol. The SDAP performs mapping between a quality of service flow (quality of service flow, QoS-flow) and a data radio bearer (data radio bearer, DRB), and belongs to a user plane (user plane, UP) protocol. The QoS-flow represents a service data flow having a specific quality of service (quality of service, QoS) requirement.

It can be learned from FIG. 3 that, for the DU, both a control plane protocol stack and a user plane protocol stack relate to RLC, MAC, and PHY. For the CU, PDCP is applicable to the control plane protocol stack and the user plane protocol stack, the RRC corresponds to only the control plane protocol stack, and the SDAP corresponds to only the user plane protocol stack. If a function of the control plane protocol stack is performed, the CU communicates with the DU through an F1-C interface. If a function of the user plane protocol stack is performed, the CU communicates with the DU through an F1-user (user) U interface. On the basis of CU-DU separation, the CU of the access network device may be separated into a CP unit and a UP unit. The CP of the CU of the access network device may be denoted as a gNB-CU-CP, and the UP of the CU of the access network device may be denoted as a gNB-CU-UP. A PDCP layer protocol exists in each of the gNB-CU-CP unit and the gNB-CU-UP unit, an RRC layer is located above the PDCP layer in the gNB-CU-CP unit, and an SDAP layer is located above the PDCP layer in the gNB-CU-UP unit.

The RLC layer may provide transparent data transmission and data transmission in an unacknowledged mode and an acknowledged mode. The MAC layer is mainly responsible for controlling and connecting a physical medium at the physical layer. The PHY layer is responsible for transmitting bits or bit groups on a physical medium, including encoding sent information and decoding received information. For a specific protocol, refer to a related technology, for example, 3GPP technical specification (technical specification, TS) 38.300. Details are not described herein in embodiments of this application.

Currently, in a network deployment phase, fixed RAN function split may be set based on prior statistical information, such as a network peak rate and an average data rate requirement, to deploy the CU and the DU. It is clear that, the foregoing function split of the access network device that is merely fixed or static cannot adapt to a real-time change of service traffic. Certainly, FIG. 3 shows only one possible function split manner. Other fixed split manners may cause insufficient compute resource utilization and bandwidth resource utilization.

Any fixed split manner may cause insufficient compute resource utilization and bandwidth utilization for a real-time change of a traffic service. In other words, different services have different QoS capability requirements, such as a network delay, a rate, and reliability. A static split manner cannot dynamically adapt to diversified service QoS requirements.

In addition, in a communication process of exchanging information between different function entities, some information may directly expose a real capability of a corresponding function entity to the outside, which poses a risk. For example, an attacker may determine a weak network location based on load information, buffer information, bandwidth information, and the like of servers of some network nodes. For example, if a network node is overloaded, a buffer overflows, or a transmission link is congested, the attacker may perform targeted malicious attacks, causing network breakdown.

Therefore, this application provides a communication method. In a process of configuring corresponding target policies for different function entities, isolation between the different function entities is implemented based on a correspondence between a real identifier and a virtual identifier, thereby improving network security.

FIG. 4 is a diagram of a communication scenario according to an embodiment of this application.

As shown in FIG. 4, an access network device may be further divided into a plurality of function entities such as an RU 210, a DU 220, and a CU 230. Certainly, the access network device may include one or more RUs 210, one or more DUs 220, and one or more CUs 230. The CU 230 is connected to a 5GC 240 to implement communication with a core network device. In embodiments of this application, the core network device may also be referred to as a core network element.

The 5GC 240 may be connected to a plurality of CUs 230, one CU 230 may be connected to a plurality of DUs 220, and one DU 220 may be connected to a plurality of RUs 210.

In some examples, the access network device may be a gNB. Protocol function entities of the access network device may include the CU 230 and the DU 220. The access network device provides a new radio (new radio, NR) user plane and control plane protocol endpoint for a terminal, and communicates with the 5GC 240 through an NG interface. NR is a 5G radio access technology. The access network device is configured to provide a wireless network connection function between the terminal and a core network.

In some examples, the CU 230 may host RRC, SDAP, and PDCP protocols of the access network device and control operations of one or more DUs. The CU 230 communicates with the DU 220 through an F1 interface.

In some examples, the DU 220 may host RLC, MAC, and PHY layers of the access network device, and its operation is controlled by the CU 230. One DU 220 may support one or more cells, and one cell supports one DU 220.

In some examples, the 5GC 240 may include any possible core network element such as an access and mobility management function (access and mobility management function, AMF) entity, a session association function (session management function, SMF) entity, a user plane function (user plane function, UPF) entity, and a unified data management (unified data management, UDM) entity.

In some examples, the RU 210, the DU 220, and the CU 230 may be deployed on a same physical device, or may be separately deployed on different physical devices. Alternatively, in the RU 210, the DU 220, and the CU 230, some function entities are deployed on a same physical device, and some function entities are deployed on different physical devices. This is not limited in embodiments of this application.

In some embodiments, the access network device may be further split into two function entities. For example, the CU 230 and the DU 220 are deployed on a same physical device, and the CU 230 and the DU 220 may be considered as one function entity. Alternatively, the DU 220 and the RU 210 are deployed on a same physical device, and the DU 220 and the RU 210 may be considered as one function entity.

Certainly, this application is not limited to the 5G network architecture. Embodiments of this application are also applicable to a long term evolution (long term evolution, LTE) network and a future possible network architecture like a 6G network. It should be understood that embodiments of this application are applicable to any network architecture having a communication connection capability.

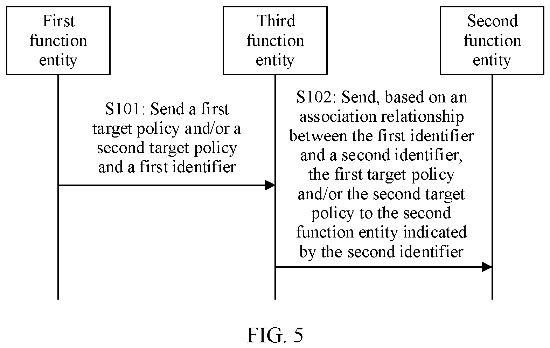

FIG. 5 is a flowchart of a communication method according to an embodiment of this application.

As shown in FIG. 5, a communication process may be applied to but is not limited to the communication scenarios shown in FIG. 1 and FIG. 4. The method may include the following steps.

S101: A first function entity sends a first target policy and/or a second target policy and a first identifier to a third function entity.

In some embodiments, the third function entity may receive the first target policy and/or the second target policy and the first identifier from the first function entity.

The first target policy may indicate a communication function split manner of a first target entity and a second target entity, and the second target policy may indicate a communication function split manner of the second target entity and a third target entity. The first identifier may be considered as a virtual identifier, indicating a virtual first target entity, a virtual second target entity, and/or a virtual third target entity. For example, the first target entity may have a real identifier, and the first target entity may be uniquely indicated by using the real identifier. In addition, the first target entity may have a virtual identifier, the virtual identifier may indicate a function entity A, and the function entity A may be equivalent to the first target entity. However, the function entity A can be uniquely indicated only by using the virtual identifier, and the first target entity cannot be determined.

For example, the identifier may be an identity (identity, ID) or an index. For example, the first identifier may be a virtual ID of the first target entity, a virtual ID of the second target entity, and/or a virtual ID of the third target entity.

In some examples, the first function entity may be considered as a function entity that determines one or more target policies, that is, a function entity configured to flexibly split communication functions between different target entities. For example, the first function entity may be referred to as a radio access network split control function (radio access network split control function, RSCF). Certainly, a name of the first function entity is not limited in embodiments of this application.

In some embodiments, the first target entity, the second target entity, and the third target entity are function entities in a radio access network (radio access network, RAN), a core network, and/or a network management domain.

For example, the second function entity is a CU. Alternatively, the second function entity is a function entity having CU and AMF functions. Alternatively, the second function entity is a function entity having CU and UPF functions. Alternatively, the second function entity is a function entity having CU and operation, administration, and maintenance (operation, administration, and maintenance, OAM) functions. OAM may be considered as a function belonging to the network management domain. It may be understood that the foregoing descriptions are merely some examples. This is not limited in embodiments of this application.

In embodiments of this application, a plurality of communication functions such as the radio access network, the core network, and the network management domain may be dynamically split, thereby improving universality.

In some embodiments, when the first target entity, the second target entity, and the third target entity are function entities in the RAN, the function entity in the RAN may include at least one of a CU, a DU, and an RU.

For example, if the first function entity determines the first target policy and the second target policy, the first target entity may be a CU, the second target entity may be a DU, and the third target entity may be an RU; or the first target entity may be an RU, the second target entity may be a DU, and the third target entity may be a CU.

For another example, if the first function entity determines the first target policy or the second target policy, the first target entity, the second target entity, and the third target entity may be any function entities mentioned above. The first target entity and the second target entity are used as an example. The first target entity may be a CU, and the second target entity may be a DU. Alternatively, the first target entity may be a DU, and the second target entity may be an RU. Alternatively, the first target entity may be a function entity having CU and DU functions, and the second target entity may be an RU. Alternatively, the first target entity may be a CU, and the second target entity may be a function entity having DU and RU functions. Similarly, division into the second target entity and the third target entity is similar to division into the first target entity and the second target entity. Details are not described herein again in embodiments of this application.

In embodiments of this application, flexible adjustment of communication functions of a plurality of function entities such as the CU, the DU, and the RU in the RAN is implemented, to adapt to quality of service requirements of different services, improve bandwidth utilization and compute resource utilization, and reduce deployment costs of different function entities in the RAN.

In the following description, embodiments of this application provide a first target policy and/or a second target policy at different granularities.

### Case A:

In some embodiments, the first target policy and/or the second target policy correspond/corresponds to any one of different terminals.

For example, the first function entity may determine, for different terminals, a first target policy and/or a second target policy corresponding to any terminal. In other words, the first function entity may determine, for each (per) possible terminal at a granularity of the terminal, a first target policy and/or a second target policy corresponding to the terminal.

For example, for a terminal 1, a first target policy and/or a second target policy corresponding to the terminal 1 are/is determined; and for a terminal 2, a first target policy and/or a second target policy corresponding to the terminal 2 are/is determined.

### Case B:

In some embodiments, the first target policy and/or the second target policy correspond/corresponds to any one of different protocol data unit (protocol data unit, PDU) sessions.

For example, the first function entity may determine, for different PDU sessions, a first target policy and/or a second target policy corresponding to any PDU session. In other words, the first function entity may determine, for each possible PDU session at a granularity of the PDU session, a first target policy and/or a second target policy corresponding to the PDU session.

For example, for a PDU session 1, a first target policy and/or a second target policy corresponding to the PDU session 1 are/is determined; and for a PDU session 2, a first target policy and/or a second target policy corresponding to the PDU session 2 are/is determined.

### Case C:

In some embodiments, the first target policy and/or the second target policy correspond/corresponds to any one of different QoS flows.

For example, the first function entity may determine, for different QoS flows, a first target policy and/or a second target policy corresponding to any QoS flow. In other words, the first function entity may determine, for each possible QoS flow at a granularity of the QoS flow, a first target policy and/or a second target policy corresponding to the QoS flow.

For example, for a QoS flow 1, a first target policy and/or a second target policy corresponding to the QoS flow 1 are/is determined; and for a QoS flow 2, a first target policy and/or a second target policy corresponding to the QoS flow 2 are/is determined.

### Case D:

In some embodiments, the first target policy and/or the second target policy correspond/corresponds to any one of different data radio bearers DRBs.

For example, the first function entity may determine, for different DRBs, a first target policy and/or a second target policy corresponding to any DRB. In other words, the first function entity may determine, for each possible DRB at a granularity of the DRB, a first target policy and/or a second target policy corresponding to the DRB.

For example, for a DRB 1, a first target policy and/or a second target policy corresponding to the DRB 1 are/is determined; and for a DRB 2, a first target policy and/or a second target policy corresponding to the DRB 2 are/is determined.

### Case E:

In some embodiments, the first target policy and/or the second target policy correspond/corresponds to any one of different data packets (packet).

For example, the first function entity may determine, for different data packets, a first target policy and/or a second target policy corresponding to any data packet. In other words, the first function entity may determine, for each possible data packet at a granularity of the data packet, a first target policy and/or a second target policy corresponding to the data packet.

For example, for a data packet 1, a first target policy and/or a second target policy corresponding to the data packet 1 are/is determined; and for a data packet 2, a first target policy and/or a second target policy corresponding to the data packet 2 are/is determined.

### Case F:

In some embodiments, the first function entity may determine, for different RUs, a target policy corresponding to any RU. When the target policy is the first target policy, the first target entity may be a DU, and the second target entity may be an RU; or the first target entity may be an RU, and the second target entity may be a DU. When the target policy is the second target policy, the second target entity may be a DU, and the third target entity may be an RU.

In this case, considering that one DU may be connected to one or more different RUs, the first function entity may determine, for each possible RU at a granularity of the RU, a first target policy corresponding to the RU.

For example, one DU is connected to two RUs, including an RU 1 and an RU 2. For the RU 1, a target policy corresponding to the RU 1 is determined; and for the RU 2, a target policy corresponding to the RU 2 is determined.

### Case G:

In some embodiments, the first function entity may determine, for different cells (cell), a first target policy and/or a second target policy corresponding to any cell. Considering that the DU may correspond to one or more different cells, the first function entity may determine, for each possible cell based on a granularity of the cell, a first target policy and/or a second target policy corresponding to the cell.

For example, for the cell 1, a first target policy and/or a second target policy corresponding to the cell 1 are/is determined; and for the cell 2, a first target policy and/or a second target policy corresponding to the cell 2 are/is determined.

In embodiments of this application, target policies at different granularities may be determined, so that a communication function can be flexibly adjusted at a corresponding granularity.

S102: The third function entity sends, based on an association relationship between the first identifier and a second identifier, the first target policy and/or the second target policy to the second function entity indicated by the second identifier.

In some embodiments, the third function entity may send, based on the association relationship between the first identifier and the second identifier, the first target policy and/or the second target policy to the second function entity indicated by the second identifier.

The second function entity includes at least one of the first target entity, the second target entity, and the third target entity. In other words, the first target entity, the second target entity, and the third target entity may be collectively referred to as the second function entity.

In some examples, the second identifier may be considered as a real identifier, indicating a real first target entity, a real second target entity, and/or a real third target entity. For example, the second identifier may be a real ID of the first target entity, a real ID of the second target entity, and/or a real ID of the third target entity. The real identifier may be, for example, a real ID or a real index. This is not limited in embodiments of this application.

It may be understood that the third function entity performs mutual mapping and conversion between real identifiers and virtual identifiers of different second function entities, to implement isolation between the second function entity and the first function entity. In this way, in a process of determining the target policy, the first function entity does not perceive the real second function entity, but splits communication functions of each virtual second function entity, thereby ensuring security of the second function entity.

In some examples, the third function entity may be considered as a function entity configured to implement mutual conversion between the first identifier and the second identifier. For example, the third function entity may be referred to as a proxy (proxy), a proxy entity, a proxy function entity, or a proxy server. A name of the third function entity is not limited in embodiments of this application.

In some examples, the second function entity may configure, based on the received target policy, a communication function corresponding to the second function entity.

For example, the first target entity receives the first target policy. The first target entity configures, based on the first target policy, a communication function corresponding to the first target entity. Similarly, descriptions of the second target entity and the third target entity are similar to descriptions of the first target entity. Details are not described herein again in embodiments of this application.

Certainly, the second target entity may relate to both the first target policy and the second target policy. In this case, a function configured by one target policy for the second target entity is usually a subset of a function configured by the other target policy for the second target entity. For example, the first target entity is a CU, the second target entity is a DU, and the third target entity is an RU. A function configured by the first target policy for the DU actually includes functions configured by the second target policy for the DU and the RU, and the function configured by the second target policy for the DU is a part of the function configured by the first target policy for the DU. Therefore, the DU may actually configure a corresponding communication function for the DU based on the second target policy.

In embodiments of this application, in a process of configuring corresponding target policies for different function entities, isolation between the first function entity and the second function entity is implemented based on a correspondence between a real identifier and a virtual identifier, thereby improving network security.

In the communication method provided in embodiments of this application, considering that communication functions corresponding to different second function entities are more properly split, the first function entity may determine the first target policy and/or the second target policy based on the first information of the second function entity.

In some embodiments, the second function entity may send a second identifier and first information corresponding to the second identifier to the third function entity. It may be understood that the second identifier identifies the second function entity. For example, the first target entity sends, to the third function entity, a second identifier indicating the first target entity and first information corresponding to the first target entity. For another example, the second target entity sends, to the third function entity, a second identifier indicating the second target entity and first information corresponding to the second target entity. For another example, the third target entity sends, to the third function entity, a second identifier indicating the third target entity and first information corresponding to the third target entity. The third function entity may map the second identifier to the first identifier based on the association relationship between the second identifier and the first identifier. The third function entity may send a first identifier and first information to the first function entity.

For example, the third function entity may send, to the first function entity, a first identifier indicating the first target entity and first information corresponding to the first target entity. For another example, the third function entity may send, to the first function entity, a first identifier indicating the second target entity and first information corresponding to the second target entity. For another example, the third function entity may send, to the first function entity, a first identifier indicating the third target entity and first information corresponding to the third target entity.

In some embodiments, the third function entity may obtain the second identifier from at least one second function entity. For example, the second identifier may be sent by the second function entity to the third function entity together with the first information corresponding to the second identifier. Certainly, the second identifier may also be separately sent by the second function entity to the third function entity.

In some embodiments, the third function entity may assign, to the second identifier, the first identifier associated with the second identifier. In this way, the third function entity may obtain the association relationship between the first identifier and the second identifier.

In some examples, the first identifier assigned by the third function entity to the second identifier may have a specific validity period. For example, the assigned first identifier can be used within some specific time periods, for example, can be used during a current PDU session, or can be used within one day. When the validity period expires, the first identifier becomes invalid. The third function entity may assign a new first identifier to the second identifier again, reconfigure a new validity period for the invalid first identifier, or the like. This is not limited in embodiments of this application.

It may be understood that, generally, a unique first identifier is assigned to one second identifier. Different second identifiers correspond to different first identifiers. In some examples, that the third function entity assigns the first identifier associated with the second identifier may also be represented as that the third function entity generates the first identifier associated with the second identifier.

In embodiments of this application, the third function entity may assign, to the second identifier, the first identifier associated with the second identifier, so that the first identifier can be configured more flexibly.

In addition, in embodiments of this application, the second identifier of the at least one second function entity is obtained, so that the third function entity configures the corresponding first identifier for the second identifier, thereby ensuring security of information related to the second function entity.

In some embodiments, the first information may include second information corresponding to communication interfaces, and the second information indicates a network communication status corresponding to the communication interface.

For example, the communication interfaces may include a first interface and a second interface. The first interface is a communication interface between the first target entity and the second target entity. The second interface is a communication interface between the second target entity and the third target entity.

In some examples, the second information may include a bandwidth resource of the communication interface.

In some examples, the second information may include a transmission delay of the communication interface.

In some examples, the second information may include a packet loss rate of the communication interface.

In some examples, the second information may include reliability of the communication interface.

In some examples, the second information may include a bandwidth resource of the communication interface and a transmission delay of the communication interface. In some examples, the second information may include a bandwidth resource of the communication interface, a transmission delay of the communication interface, and reliability of the communication interface. In some examples, the second information may include a bandwidth resource of the communication interface, a transmission delay of the communication interface, a packet loss rate of the communication interface, and reliability of the communication interface.

It may be understood that only a limited quantity of examples are shown above. The second information may further include any other two or three items. This is not limited in embodiments of this application.

In other examples, the second information may further include any other parameter related to the network communication status. This is not limited in embodiments of this application.

Embodiments of this application provide a plurality of possible parameters included in the second information, so that the first function entity determines an appropriate target policy based on the parameters in the second information.

In some embodiments, the first information may include third information corresponding to the second function entity. The third information indicates a processing resource status corresponding to the second function entity. For example, third information corresponding to the first target entity may indicate a processing resource status corresponding to the first target entity. For another example, third information corresponding to the second target entity may indicate a processing resource status corresponding to the second target entity. For another example, third information corresponding to the third target entity may indicate a processing resource status corresponding to the third target entity.

In some examples, the first function entity may further obtain third information from the first target entity, the second target entity, and/or the third target entity. For example, the first function entity obtains, from the first target entity, third information corresponding to the first target entity. For another example, the first function entity obtains, from the second target entity, third information corresponding to the second target entity. For another example, the first function entity obtains, from the third target entity, third information corresponding to the third target entity.

In some examples, the third information may include processor utilization.

In some examples, the third information may include memory utilization.

In some examples, the third information may include disk utilization.

In some examples, the third information may include processor utilization and memory utilization. In some examples, the third information may include processor utilization and disk utilization. In some examples, the third information may include memory utilization and disk utilization. In some examples, the third information may include processor utilization, memory utilization, and disk utilization.

In other examples, the third information may further include any other parameter related to the processing resource status. This is not limited in embodiments of this application.

Embodiments of this application provide a plurality of possible parameters included in the third information, so that the first function entity determines an appropriate target policy based on the parameters in the third information.

In some embodiments, the first information may include fourth information, and the fourth information indicates a quality of service QoS requirement corresponding to at least one service.

In some embodiments, the fourth information may include a packet delay budget (packet delay budget, PDB).

In some embodiments, the fourth information may include a guaranteed bit rate (guaranteed bit rate, GBR).

In some embodiments, the fourth information may include a packet error rate (packet error rate, PER).

In some embodiments, the fourth information may include a PDB and a GBR. In some embodiments, the fourth information may include a PDB and a PER. In some embodiments, the fourth information may include a GBR and a PER. In some embodiments, the fourth information may include a PDB, a GBR, and a PER.

In other examples, the fourth information may further include any other QoS-related parameter. This is not limited in embodiments of this application.

Embodiments of this application provide a plurality of possible parameters included in the fourth information, so that the first function entity determines an appropriate target policy based on the parameters in the fourth information, to meet a plurality of possible QoS requirements.

In some embodiments, the first function entity may determine the first target policy and/or the second target policy based on one or more of the second information corresponding to the first interface, the second information corresponding to the second interface, the fourth information, the third information corresponding to the first target entity, the third information corresponding to the second target entity, and the third information corresponding to the third target entity.

For example, the first function entity may determine the first target policy based on the second information corresponding to the first interface. For another example, the first function entity may determine the second target policy based on the second information corresponding to the second interface and the third information corresponding to the second target entity. For another example, the first function entity may determine the first target policy based on the second information corresponding to the first interface, the third information corresponding to the first target entity, and the third information corresponding to the second target entity. For another example, the first function entity may determine the first target policy and the second target policy based on the second information corresponding to the first interface, the fourth information, the third information corresponding to the first target entity, and the third information corresponding to the third target entity. For another example, the first function entity may determine the first target policy and the second target policy based on the second information corresponding to the first interface, the second information corresponding to the second interface, the fourth information, the third information corresponding to the first target entity, and the third information corresponding to the third target entity. For another example, the first function entity may determine the first target policy and the second target policy based on the second information corresponding to the first interface, the second information corresponding to the second interface, the fourth information, the third information corresponding to the first target entity, the third information corresponding to the second target entity, and the third information corresponding to the third target entity.

Certainly, only a limited quantity of examples are shown above. The first function entity may further determine the first target policy and/or the second target policy based on any other one, two, three, four, five, or six parameters. This is not limited in embodiments of this application.

In some examples, the first interface may be a communication interface between the first target entity and the second target entity. For example, if the first target entity is a CU and the second target entity is a DU, the first interface may be an interface corresponding to a midhaul link. In some other examples, the second interface may be a communication interface between the second target entity and the third target entity. For example, if the second target entity is a DU and the second target entity is an RU, the second interface may be an interface corresponding to a fronthaul link.

In embodiments of this application, when the first function entity comprehensively determines a target policy based on dimensions such as a network communication status of a communication interface, a processing resource status of a function entity, and a QoS requirement of a service, the first function entity cannot learn of a real second function entity, thereby ensuring security of information corresponding to the second function entity.

In the communication method provided in embodiments of this application, the third function entity communicates with different second function entities through transmission transparent to an intermediate node, to ensure that any second function entity cannot learn of information related to another second function entity.

In some embodiments, in a process in which the third function entity sends target policies to different second function entities, for example, the first target policy is related to the first target entity and the second target entity, and is irrelevant to the third target entity, and the second target policy is related to the second target entity and the third target entity, and is irrelevant to the first target entity. Therefore, the third function entity may send different target policies to the second function entities through transmission transparent to an intermediate node.

For example, the first target entity is a CU, the second target entity is a DU, the third target entity is an RU, the first target policy is related to the CU and the DU, and the second target policy is related to the DU and the RU. The third function entity may send the first target policy and the second target policy to the CU. However, because the second target policy is irrelevant to the CU, the CU cannot parse out information related to the second target policy, which may also be considered as that the information related to the second target policy is transparent to the CU. The CU forwards the second target policy to the DU.

For another example, the second function entity sends the first information to the third function entity. It is assumed that the first target entity is a CU, the second target entity is a DU, and the third target entity is an RU. The RU may send, to the DU, third information corresponding to the RU, where the information cannot be parsed by the DU and the CU. The DU forwards, to the CU, third information corresponding to the RU, and the DU may further send, to the CU, third information corresponding to the DU. Neither the third information corresponding to the RU nor the third information corresponding to the DU can be parsed by the CU. The CU continues to forward, to the third function entity, the third information corresponding to the RU and the third information corresponding to the DU. In this case, the CU may further send, to the third function entity, third information corresponding to the CU.

For example, the third information of any second function entity may be carried in a container (container) message of the second function entity that is visible only to the third function entity.

It may be understood that, for a specific implementation process of the transmission transparent to the intermediate node, refer to a related technology. Details are not described herein in embodiments of this application.

In embodiments of this application, through transmission transparent to the intermediate node, any second function entity cannot learn of information related to another second function entity, thereby ensuring security of information between the different second function entities.

In the communication method provided in embodiments of this application, to reduce resource overheads in a communication process in which the first target policy and/or the second target policy are/is indicated to the second function entity, the method may further include: The first function entity sends at least one candidate function split manner and/or fifth information to the third function entity, where the fifth information indicates a communication function configured for each second function entity corresponding to the candidate function split manner; and the third function entity sends the at least one candidate function split manner and/or the fifth information to the second function entity.

In some embodiments, the first function entity may send the at least one candidate function split manner to the third function entity. For example, the first function entity sends, to the first target entity, any possible split manner in the foregoing embodiments, for example, Option 1, Option 3, or Option 7.

For example, when the first function entity sends the at least one candidate function split manner, the first information sent by the first function entity may include an identifier indicating a first target function split manner and/or an identifier indicating a second target function split manner. The candidate function split manner may include the first target function split manner and the second target function split manner. The first target policy may include the first target function split manner and/or a communication function of each second function entity in the first target function split manner. The second target policy may include the second target function split manner and/or a communication function of each second function entity in the second target function split manner. In this case, the first information may include an identifier 1, and the identifier 1 indicates that the first target function split manner is "Manner 2". It is assumed that the first target entity is a CU and the second target entity is a DU. In this way, the CU can determine, in Manner 2 indicated by the first information, a communication function corresponding to the CU.

In some other embodiments, the first function entity may send fifth information to the third function entity, where the fifth information may indicate a communication function of each function entity corresponding to the candidate function split manner. For example, the candidate function split manner includes Manner 2, and two second function entities corresponding to the candidate function split manner are a CU and a DU. In this case, the fifth information includes a communication function corresponding to the CU obtained through division in Manner 2 and a communication function corresponding to the DU obtained through division in Manner 2. For another example, the candidate function split manner includes Manner 2 and Manner 5, and two second function entities corresponding to the candidate function split manner are a CU and a DU. In this case, the fifth information includes a communication function corresponding to the CU obtained through division in Manner 2, a communication function corresponding to the DU obtained through division in Manner 2, a communication function corresponding to the CU obtained through division in Manner 5, and a communication function corresponding to the DU obtained through division in Manner 5.

For example, when the first function entity sends the fifth information, the first information sent by the first function entity may include identifiers indicating communication functions corresponding to different function entities. For example, the first information may include an identifier 2, and the second function entity may determine, based on the identifier 2, a communication function of each function entity corresponding to the second function entity, and configure a communication function corresponding to the second function entity.

In some other embodiments, the first function entity may send the at least one candidate function split manner and the fifth information to the third function entity. It may be understood that, in this embodiment, the fifth information needs to include a communication function of each function entity corresponding to each of the at least one sent candidate function split manner. For example, the at least one candidate function split manner sent by the first function entity to the second function entity includes Manner 2 and Manner 6. In this case, the fifth information sent by the first function entity to the second function entity needs to include communication functions corresponding to two second function entities obtained through division in Manner 2 and communication functions corresponding to two second function entities obtained through division in Manner 6.

In some embodiments, the third function entity may forward, to one or more second function entities, the at least one candidate function split manner and/or the fifth information received by the third function entity.

In embodiments of this application, a plurality of candidate function split manners and/or corresponding communication functions may be further notified to the second function entity in advance, so that only some information needs to be indicated when a target policy is indicated, thereby reducing resource overheads in a communication process.

In the communication method provided in embodiments of this application, the communication function split manner may include a manner of splitting a set including at least one of the following communication functions: a communication function corresponding to a RAN protocol layer, a communication function corresponding to one or more network elements in a core network, or a communication function corresponding to at least one network management entity.

In some embodiments, the communication function split manner may be a manner of splitting the communication function corresponding to the RAN protocol layer. The split manner may include at least one of a candidate function split manner, a first target function split manner, and a second target function split manner.

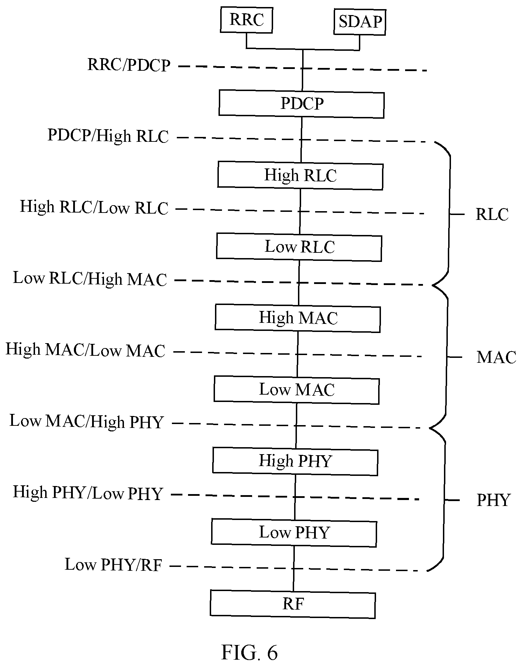

In some examples, FIG. 6 shows a plurality of possible candidate function split manners. Communication functions may be split at a protocol layer granularity. For example, a plurality of possible candidate function split manners such as Option (option) 1 to Option 8 are provided. Option 1 may be communication function split between RRC and PDCP shown in FIG. 6, or Option 1 may be communication function split between SDAP and PDCP shown in FIG. 6. It may be understood that, in the following embodiments of this application, control plane RRC is used as an example for description. For division of a user plane, RRC may be replaced with SDAP. Details are not described in embodiments of this application.

In embodiments of this application, an option may also be referred to as a manner, a function split manner, a split manner, or the like, which may be used interchangeably.

Option 2 may be communication function split between PDCP and high RLC shown in FIG. 6. Option 3 may be communication function split between high RLC and low RLC shown in FIG. 6. Therefore, Option 3 may also be considered as intra RLC communication function split. Option 4 may be communication function split between low RLC and high MAC shown in FIG. 6. Option 5 may be communication function split between high MAC and low MAC shown in FIG. 6. Therefore, Option 5 may also be considered as intra MAC communication function split. Option 6 may be communication function split between low MAC and high PHY shown in FIG. 6. Option 7 may be communication function split between high PHY and low PHY shown in FIG. 6. Therefore, Option 7 may also be considered as intra PHY communication function split. Option 8 may be communication function split between low PHY and radio frequency (radio frequency, RF) shown in FIG. 6.

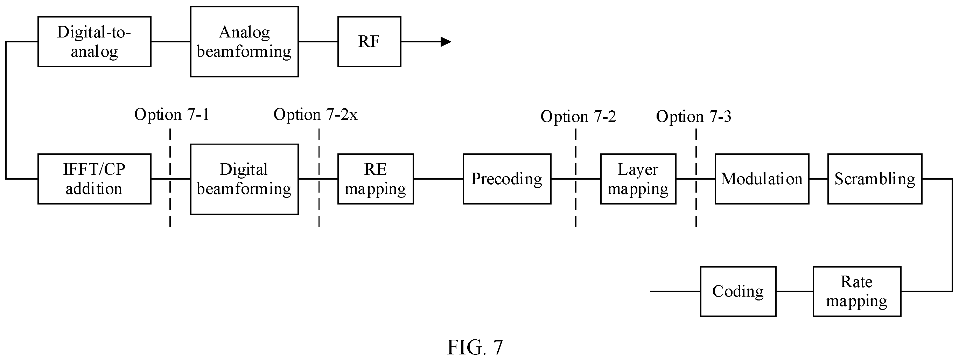

In some other examples, for intra (intra) communication function split of some protocol layers, such as RLC, MAC, and PHY, the protocol layer may be divided into a higher layer and a lower layer. The following uses PHY as an example to describe intra communication function split of a protocol layer. A split manner of another protocol layer is similar to that of PHY. A difference lies in that intra protocol layer communication functions are different. For details, refer to a communication function configured in a corresponding protocol layer. This is not limited in embodiments of this application. Refer to FIG. 7. Intra PHY communication function split is performed in downlink communication. It is assumed that intra PHY may be further split into functions such as coding (coding), rate mapping (rate mapping), scrambling (scrambling), modulation (modulation), layer (layer) mapping (mapping), precoding (precoding), resource element (resource element, RE) mapping, digital beamforming (digital beamforming, DBF), inverse fast Fourier transform (inverse fast Fourier transform, IFFT)/cyclic prefix (cyclic prefix, CP) addition (addition), digital-to-analog (digital-to-analog), and analog beamforming (analog beamforming). The RE may be a unit radio resource including one subcarrier and one symbol (symbol). In this case, the split manner of Option 7 may further include manners such as Option 7-1, Option 7-2, Option 7-2x, and Option 7-3.

For example, Option 7-1 may be communication function split between IFFT/CP addition and DBF shown in FIG. 7; Option 7-2 may be communication function split between precoding and layer mapping shown in FIG. 7; Option 7-2x may be communication function split between DBF and RE mapping shown in FIG. 7; and Option 7-3 may be communication function split between layer mapping and modulation shown in FIG. 7.

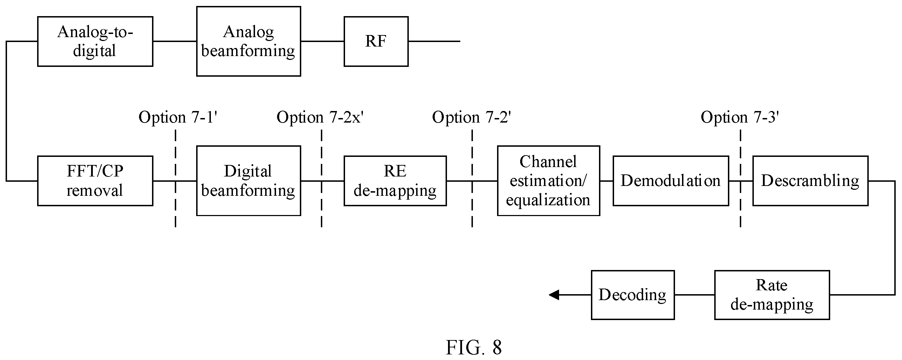

Refer to FIG. 8. Intra PHY communication function split is performed in uplink communication. It is assumed that intra PHY may be further split into functions such as decoding (decoding), rate de-mapping (rate de-mapping), descrambling (descrambling), demodulation (demodulation), channel estimation (channel estimation)/equalization (equalization), RE de-mapping (de-mapping), DBF, fast Fourier transform (fast Fourier transform, FFT)/CP removal (removal), analog-to-digital (analog-to-digital), and analog beamforming. In this case, the split manner of Option 7 may further include manners such as Option 7-1', Option 7-2', Option 7-2x', and Option 7-3'. Demodulation may also be referred to as de-modulation.

For example, Option 7-1' may be function split between FFT/CP removal and DBF shown in FIG. 8; Option 7-2' may be communication function split between RE de-mapping and channel estimation/equalization shown in FIG. 8; Option 7-2x' may be communication function split between DBF and RE de-mapping shown in FIG. 8; and Option 7-3' may be communication function split between demodulation and descrambling shown in FIG. 8.

Certainly, for intra MAC and intra RLC split manners, refer to the intra PHY split manner. Certainly, a specific communication function of each intra protocol layer and specific functions to be combined together through split may be determined based on an actual situation. This is not limited in embodiments of this application.

It may be understood that any one of the plurality of options shown in FIG. 6 to FIG. 8 may be considered as a candidate function split manner. One or more of the foregoing options form one or more candidate function split manners. The first function entity may select one option from the one or more candidate function split manners as the first target function split manner.

Similarly, a process in which the first function entity determines the second target function split manner is similar to the process in which the first function entity determines the first target function split manner. Details are not described herein again in embodiments of this application.

It should be noted that FIG. 6 to FIG. 8 show only a limited quantity of candidate function split manners. In other examples, any other more or fewer possible split manners may be included. This is not limited in embodiments of this application.

It may be understood that, if the first function entity determines the first target policy and/or the second target policy at different granularities, assuming that the granularity is a PDU session, the first target entity is a CU, and the second target entity is a DU. For a PDU session 1, it may be determined that the first target policy corresponds to Option 2; and for a PDU session 2, it may be determined that the first target policy corresponds to Option 5. Certainly, the foregoing description is merely an example. This is not limited in embodiments of this application.

In some examples, a communication function related to the candidate function split manner may further include a core network function, a network management domain function, and the like, for example, may further include a mobility management function, a user plane function, an identity management function, and the like of a core network. This is not limited in embodiments of this application.

In embodiments of this application, a plurality of candidate function split manners are provided in advance, and a split manner corresponding to the target policy is selected from the plurality of candidate function split manners. This reduces calculation complexity of dynamically configuring the target policy, and can also avoid improper split of the communication function.

In some other embodiments, the communication function split manner may be a manner of splitting a communication function corresponding to one or more network elements in the core network.

For example, a communication function corresponding to a network element like an AMF, an SMF, or a UPF in the core network may be split.

In some other embodiments, the communication function split manner may be a manner of splitting a communication function corresponding to at least one network management entity.

For example, a communication function corresponding to a function entity in a network management domain such as OAM may be split.

In some embodiments, the communication function split manner may be for a communication function corresponding to a RAN protocol layer and a communication function corresponding to one or more network elements in a core network; the communication function split manner may be for a communication function corresponding to a RAN protocol layer and a communication function corresponding to at least one network management entity; the communication function split manner may be for a communication function corresponding to one or more network elements in a core network and a communication function corresponding to at least one network management entity; or the communication function split manner may be for a communication function corresponding to a RAN protocol layer, a communication function corresponding to one or more network elements in a core network, and a communication function corresponding to at least one network management entity.

In embodiments of this application, a plurality of communication functions may be flexibly split, so that different function entities configure different communication functions, to adapt to quality of service requirements of different services in different scenarios.

Based on the plurality of candidate function split manners provided in FIG. 6 to FIG. 8, embodiments of this application also provide a plurality of first target policies and a plurality of second target policies, indicating a plurality of split cases of communication functions of different function entities.

### Case 1:

In some embodiments, the first target policy indicates that a communication function of the first target entity includes RRC. The second target policy indicates that a communication function of the second target entity includes PDCP, RLC, MAC, and high physical layer (high physical layer, HIGH PHY). The second target policy indicates that a communication function of the third target entity includes low physical layer (low physical layer, LOW PHY).

In some examples, in this case, the first target policy indicating the communication function of the first target entity may correspond to the second target policy indicating a sum of the communication functions of the second target entity and the third target entity, for example, PDCP, RLC, MAC, HIGH PHY, and LOW PHY.

### Case 2:

In some embodiments, the first target policy indicates that a communication function of the first target entity includes RRC and PDCP. The second target policy indicates that a communication function of the second target entity includes RLC, MAC, and HIGH PHY. The second target policy indicates that a communication function of the third target entity includes LOW PHY.

In some examples, in this case, the first target policy indicating the communication function of the first target entity may include the second target policy indicating a sum of the communication functions of the second target entity and the third target entity, for example, RLC, MAC, HIGH PHY, and LOW PHY.

### Case 3:

In some embodiments, the first target policy indicates that a communication function of the first target entity includes RRC, PDCP, and RLC. The second target policy indicates that a communication function of the second target entity includes MAC and HIGH PHY. The second target policy indicates that a communication function of the third target entity includes LOW PHY.

In some examples, in this case, the first target policy indicating the communication function of the first target entity may include the second target policy indicating a sum of the communication functions of the second target entity and the third target entity, for example, MAC, HIGH PHY, and LOW PHY.

### Case 4:

In some embodiments, the first target policy indicates that a communication function of the first target entity includes RRC, PDCP, RLC, and MAC. The second target policy indicates that a communication function of the second target entity includes HIGH PHY. The second target policy indicates that a communication function of the third target entity includes LOW PHY.

In some examples, in this case, the first target policy indicating the communication function of the first target entity may include the second target policy indicating a sum of the communication functions of the second target entity and the third target entity, for example, HIGH PHY and LOW PHY.

### Case 5:

In some embodiments, the first target policy indicates that a communication function of the first target entity includes RRC, PDCP, RLC, MAC, and HIGH PHY. The first target policy indicates that a communication function of the second target entity includes LOW PHY. It may be understood that, in this case, the first function entity may determine only the first target policy.

For any one of Case 1 to Case 5, for HIGH PHY and LOW PHY, refer to the intra PHY split manners shown in FIG. 7 and FIG. 8. A part that is closer to a MAC layer after the intra PHY function split may be considered as HIGH PHY, and a part that is closer to an RF layer after the intra PHY function split may be considered as LOW PHY.

In the communication method provided in embodiments of this application, a possible representation form of the first function entity in the network communication system is considered. The first function entity, the second function entity, and the third function entity in any one of the foregoing embodiments are function entities that are independent of each other; or the third function entity is integrated into the second function entity.

In some embodiments, the first function entity, the second function entity, and the third function entity are function entities that are independent of each other.

In some embodiments, the third function entity is communicatively connected to the at least one second function entity.

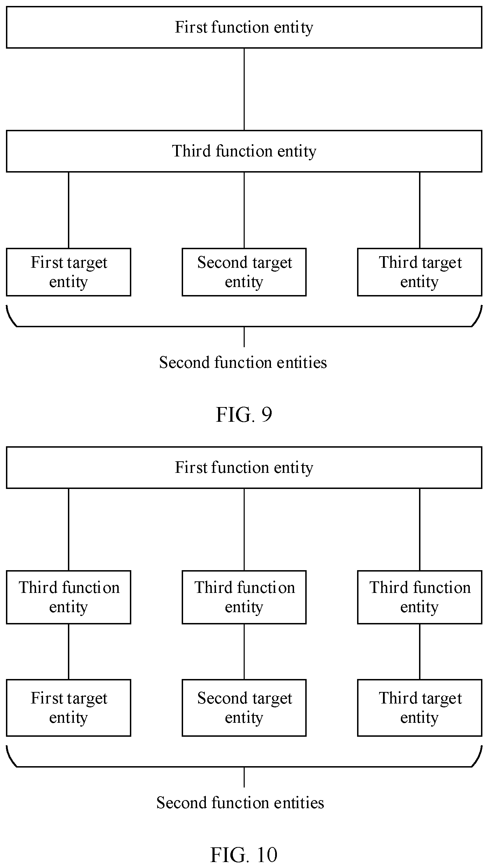

In some examples, refer to FIG. 9, FIG. 10, and FIG. 11. Afirst function entity, a second function entity, and a third function entity are different function entities that are independent of each other. The third function entity may be communicatively connected to any one or more of a first target entity, a second target entity, and a third target entity.

For example, the first function entity may be deployed as an independent network element in a RAN, a core network, or a network management domain. The first function entity is connected to one or more second function entities via the third function entity. The third function entity isolates the first function entity from each second function entity. Virtual identity information is assigned to the second function entity, so that real identity information of the second function entity can be shielded from the first function entity. For example, when the second function entity sends some information related to a network status, a processing status, and the like, the first function entity does not know a real identity of the second function entity corresponding to the information.

For example, refer to FIG. 9. One first function entity may be connected to one third function entity. The third function entity may be connected to a plurality of second function entities. For example, the third function entity may be connected to a first target entity, the third function entity may be connected to a second target entity, and the third function entity may be connected to a third target entity.

For another example, refer to FIG. 10. One first function entity may be connected to a plurality of third function entities. Different third function entities each are connected to one second function entity. For example, a first target entity, a second target entity, and a third target entity each are connected to one third function entity. In this case, the three corresponding third function entities are connected to one first function entity.

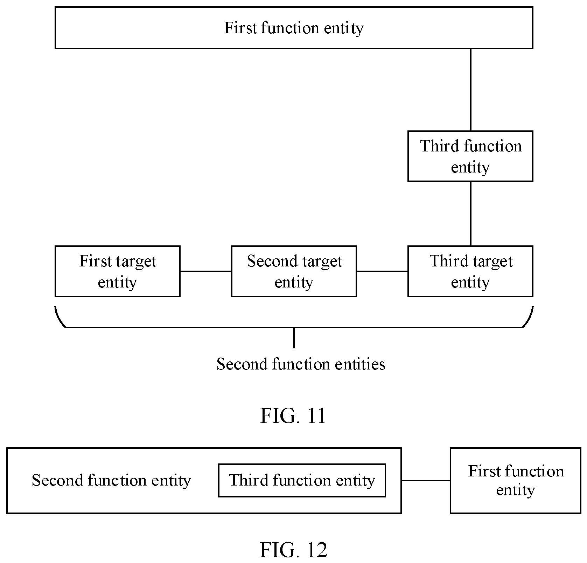

For another example, refer to FIG. 11. One first function entity may be connected to one third function entity. The third function entity may be connected to one second function entity. As shown in FIG. 11, the third function entity is connected to a third target entity, and the first function entity is connected to the third function entity. In this case, for other second function entities, for example, a first target entity may be connected to a second target entity, and the second target entity may be connected to the third target entity. In other words, the other second function entities may be indirectly connected to the third function entity via the third target entity.

In embodiments of this application, in a scenario in which the third function entity is independent of the first function entity and the second function entity, the third function entity may be communicatively connected to one or more second function entities, and a quantity of third function entities and a manner of a connection to the second function entity may be dynamically selected in different scenarios. In this way, in a plurality of scenarios, isolation between the first function entity and the second function entity can be ensured, thereby ensuring data transmission security.

In some other embodiments, refer to FIG. 12. A third function entity may be integrated into a second function entity. For example, the third function entity may be integrated into a first target entity, a second target entity, or a third target entity.

For example, the second function entity is a function entity in a RAN, for example, the second function entity is a CU, a DU, and/or an RU. In this case, the third function entity may be integrated into the CU, the DU, and/or the RU. For another example, the third function entity may also be integrated into a near-real-time radio access network intelligent controller (near-real-time radio access network intelligent controller, NRT-RIC) or a non-real-time radio access network intelligent controller (non-real-time radio access network intelligent controller, Non-RT RIC) in an O-RAN architecture.

For another example, the second function entity is a function entity in a core network, for example, the second function entity is an AMF. In this case, the third function entity may be integrated into the AMF.

For another example, the second function entity is a function entity in a network management domain, for example, the second function entity is OAM. In this case, the third function entity may be integrated into the OAM.

Certainly, 5G NR is used as an example for description in FIG. 9 to FIG. 12. Embodiments of this application may be further applied to a future 6G network architecture. For example, the first function entity is deployed in any network element function like a RAN, a core network, or a network management domain defined in a 6G network. For example, a possible 6G network architecture includes a radio network area (radio network area, RNA) and an RU. The RNA may include a CU, a DU, and/or a core network function. The first function entity may be deployed on the RNA and/or the RU, to implement split of a communication function between the RNA and the RU.

Embodiments of this application provide a plurality of deployment manners of the third function entity, to be applicable to a plurality of possible network architectures. In this way, when network functions including a RAN function are flexibly split, security of communication between different function entities can be ensured in the plurality of network architectures.

According to the communication method provided in embodiments of this application, the method is applied to a CU, and the second function entity includes a DU and/or an RU; the method is applied to a DU, and the second function entity includes a CU and/or an RU; or the method is applied to an RU, and the second function entity includes a CU and/or a DU.

In some embodiments, the third function entity may be a CU. In this case, the second function entity may include a DU; the second function entity may include an RU; or the second function entity may include a DU and an RU.

In some embodiments, the third function entity may be a DU. In this case, the second function entity may include a CU; the second function entity may include an RU; or the second function entity may include a CU and an RU.

In some embodiments, the third function entity may be an RU. In this case, the second function entity may include a CU; the second function entity may include a DU; or the second function entity may include a CU and a DU.

Embodiments of this application may be further applied to a function entity in a RAN, without the need to independently deploy an independent network element, thereby reducing deployment costs, and is applicable to more network architectures, thereby improving universality.

The following describes the foregoing solutions based on more specific examples.

### Example A:

In some embodiments, the third function entity, the first function entity, and the second function entity are deployed independently of each other. The third function entity is communicatively connected to each second function entity. The second function entity may include a CU, a DU, and an RU. The first target entity may be a CU, the second target entity may be a DU, and the third target entity may be an RU. The CU may communicate with the DU through an F1 interface, and the DU may communicate with the RU through an F2 interface.

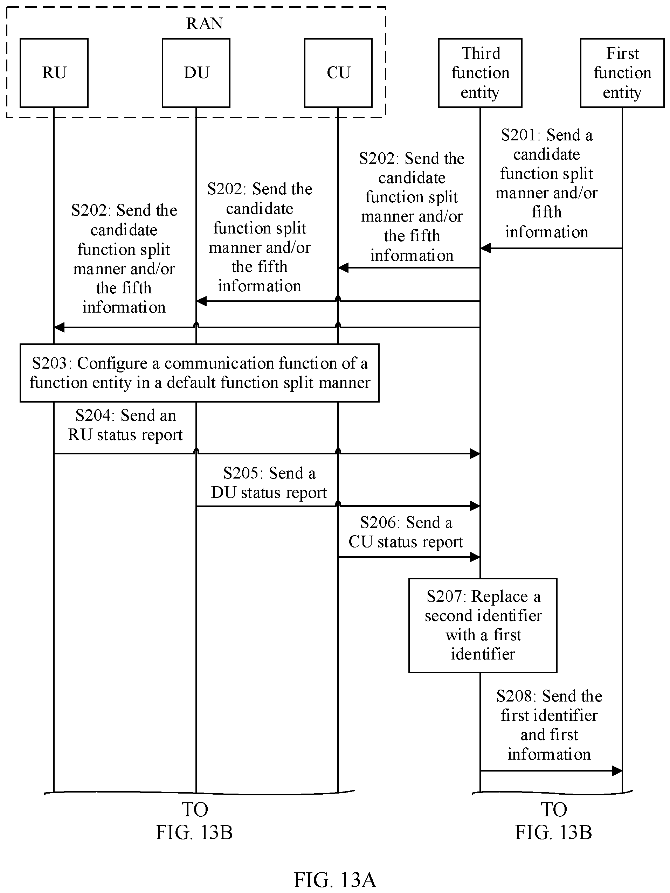

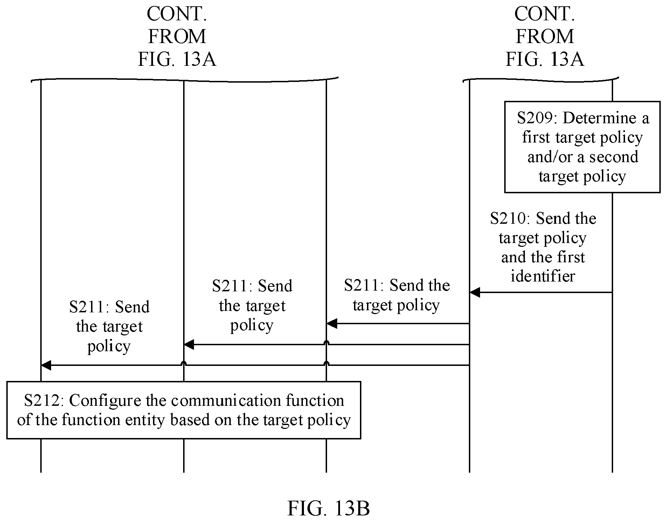

As shown in FIG. 13A and FIG. 13B, an embodiment of this application further provides a communication method. The method may include the following steps.

S201: A first function entity sends a candidate function split manner and/or fifth information to a third function entity.

For example, the first function entity may send at least one candidate function split manner and/or fifth information to the third function entity.

S202: The third function entity sends the candidate function split manner and/or the fifth information to a second function entity.

In some examples, the third function entity may forward, to a CU, the at least one candidate function split manner and/or the fifth information received in S201.

For example, when sending the at least one candidate function split manner and/or the fifth information to the CU, the third function entity may send only a candidate function split manner and/or fifth information related to communication function split between the CU and a DU. In other words, a part of the at least one candidate function split manner may be used only for communication function split between the DU and an RU, and this part does not need to be sent to the CU. Similarly, the fifth information may also include a communication function of each function entity related only to the communication function split between the DU and the RU, and this part does not need to be sent to the CU.

Similarly, the third function entity may forward, to a DU, the at least one candidate function split manner and/or the fifth information received in S201. In addition, the third function entity may forward, to an RU, the at least one candidate function split manner and/or the fifth information received in S201. A process thereof is similar to the process of sending to the CU. Details are not described herein again in embodiments of this application.

It may be understood that S201 and S202 are optional. In some cases, the at least one candidate function split manner and/or the fifth information may be further preconfigured on the CU, the DU, and/or the RU.

S203: The second function entity configures a communication function of the function entity in a default function split manner.

For example, any second function entity like a CU, a DU, or an RU may configure a communication function of the function entity in a default function split manner. The default function split manner may be predefined in a protocol, or may be preconfigured. The purpose is to ensure that a communication service can be normally executed before the first function entity adjusts a communication function of the second function entity.

In some examples, if there is no communication service, S203 may not be performed.

In some examples, the second function entity may further locally back up a corresponding to-be-executed communication function in advance based on the at least one candidate function split manner and/or the fifth information. It is assumed that there is Option 2, a communication function corresponding to each function entity in Option 2, Option 5, and a communication function corresponding to each function entity in Option 5. A DU is used as an example. The DU may configure, based on Option 2 and/or the communication function corresponding to each function entity in Option 2, a communication function corresponding to the DU in Option 2; and the DU may configure, based on Option 5 and/or the communication function corresponding to each function entity in Option 5, the communication function corresponding to the DU in Option 5. In this case, both the configured communication function corresponding to the DU in Option 2 and the configured communication function corresponding to the DU in Option 5 may be set to an inactive state. Certainly, if an option is exactly the default function split manner, a communication function corresponding to the DU in the option may be set to an active state.

For another example, the second function entity may generate or deregister, based on a requirement by using a virtualization technology or a container technology, communication functions corresponding to the second function entity in different options. For a specific implementation process of the virtualization technology or the container technology, refer to a related technology. Details are not described herein in embodiments of this application.

S204: The RU sends an RU status (state) report (report) to the third function entity.

In some examples, the RU status report may include third information corresponding to the RU and a second identifier of the RU. In some other examples, the RU status report may further include second information corresponding to a second interface.

S205: The DU sends a DU status report to the third function entity.

In some examples, the DU status report may include third information corresponding to the DU, a second identifier of the DU, and the second information corresponding to the second interface. The second information corresponding to the second interface may be sent by the RU to the third function entity in S204. In this case, the DU status report may not include the second information corresponding to the second interface.

In some other examples, the DU status report may further include second information corresponding to a first interface.

In some examples, if one DU is connected to a plurality of RUs, the DU status report may further include real IDs of the plurality of RUs connected to the DU.

S206: The CU sends a CU status report to the third function entity.

In some examples, the CU status report may include third information corresponding to the CU, a second identifier of the CU, and the second information corresponding to the first interface. The second information corresponding to the first interface may be sent by the DU to the third function entity in S205. In this case, the CU status report may not include the second information corresponding to the first interface.

In some other examples, the CU status report may further include fourth information.

In some examples, if one CU is connected to a plurality of DUs, the CU status report may further include real IDs of the plurality of DUs connected to the CU.

It may be understood that there is no strict sequence of performing the steps in S204 to S206. This is not limited in embodiments of this application.

S207: The third function entity replaces the second identifier with a first identifier.

For example, the second identifier of each second function entity obtained in S204, S205, and S206 is replaced with a corresponding first identifier. For example, a real ID of the RU is replaced with a virtual ID of the RU, a real ID of the DU is replaced with a virtual ID of the DU, and a real ID of the CU is replaced with a virtual ID of the CU.

In some examples, the second identifier of each second function entity may be preconfigured by the third function entity. For example, in a process of establishing a service interface between each second function entity and the third function entity, the second identifier is assigned by the third function entity to each second function entity.

It may be understood that the first identifier may be uniquely identified at the third function entity. In this way, it can be ensured that another device or function entity cannot identify a real second function entity based on the first identifier, thereby ensuring network security.

S208: The third function entity sends the first identifier and first information to the first function entity.

For example, the third function entity sends one or more of the virtual ID of the RU, the third information of the RU, the virtual ID of the DU, the third information of the DU, the virtual ID of the CU, the third information of the CU, the fourth information, the second information of the first interface, and the second information of the second interface to the first function entity.

S209: The first function entity determines a first target policy and/or a second target policy.

For example, the first function entity determines the first target policy and/or the second target policy based on the first information. For example, the first function entity may determine a first target function split manner and/or a second target function split manner from the at least one candidate function split manner; and obtain the first target policy based on the first target function split manner, and obtain the second target policy based on the second target function split manner.

S210: The first function entity sends the target policy and the first identifier to the third function entity.

For example, the first function entity sends, to the third function entity, the first target policy and/or the second target policy, and first identifiers of second function entities related to the target policies, for example, the virtual ID of the CU and the virtual ID of the DU that correspond to the first target policy, and the virtual ID of the DU and the virtual ID of the RU that correspond to the second target policy.

S211: The third function entity sends the target policy to the second function entity.

For example, the third function entity determines, based on the first identifier, specific real second function entities correspond to each target policy. For example, the third function entity determines the real ID of the CU and the real ID of the DU based on the virtual ID of the CU and the virtual ID of the DU that correspond to the first target policy. The third function entity may send the first target policy to the CU, and the third function entity may also send the first target policy to the DU. Similarly, the third function entity may send the second target policy to the DU, and the third function entity may also send the second target policy to the RU.

S212: The second function entity configures the communication function of the function entity based on the target policy.

For example, any second function entity like a CU, a DU, or an RU may configure a communication function of the function entity based on a respectively received target policy.

In some examples, if a communication function corresponding to the second function entity in each candidate function split manner is preconfigured for the second function entity, and is set to an inactive state, in S212, a communication function that matches the target policy may be set to an active state based on the target policy, and a remaining unmatched communication function is set to an inactive state or disabled. The matched communication function may be understood as follows: Assuming that the target policy corresponds to Option 2, the communication function corresponding to the second function entity in Option 2 is the matched communication function.

In some examples, the DU may receive both the first target policy and the second target policy. In this case, a communication function configured by one target policy for the DU is usually a subset of a communication function configured by the other target policy for the DU. The scenario shown in FIG. 13A and FIG. 13B is used as an example. The DU may perform configuration based on a communication function corresponding to the DU in a split manner between the DU and the RU.

It may be understood that, for specific implementation processes of S201 to S212, refer to the descriptions of the embodiments in FIG. 5 to FIG. 12. Details are not described herein again in embodiments of this application.

The embodiment described in Example A provides a manner in which the first function entity obtains the status information of the second function entity via the third function entity, and performs communication function split. In this way, when real identity information of the second function entity is not exposed, a network transmission status and a processor resource status of one or more second function entities can be obtained in real time, to flexibly split functions of network entities, thereby meeting service traffic requirements and reducing overall network operating overheads.

### Example B:

In some embodiments, the third function entity, the first function entity, and the second function entity are deployed independently of each other. The second function entity may include a CU, a DU, and an RU. The first target entity may be a CU, the second target entity may be a DU, and the third target entity may be an RU. The CU may communicate with the DU through an F1 interface, and the DU may communicate with the RU through an F2 interface. The third function entity is communicatively connected to a second function entity, for example, a CU.

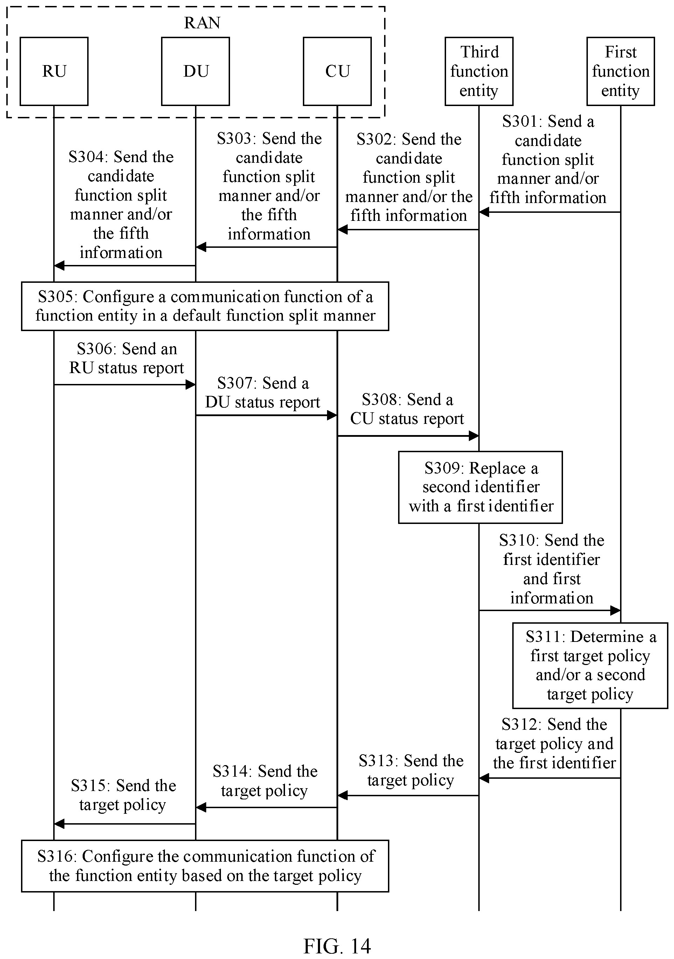

As shown in FIG. 14, an embodiment of this application further provides a communication method. The method may include the following steps.

S301: A first function entity sends a candidate function split manner and/or fifth information to a third function entity.

S302: The third function entity sends the candidate function split manner and/or the fifth information to a CU.

It may be understood that implementation processes of S301 and S302 are similar to those of S201 and S202. Details are not described herein again in embodiments of this application.

S303: The CU sends the candidate function split manner and/or the fifth information to a DU.

S304: The DU sends the candidate function split manner and/or the fifth information to an RU.

It may be understood that implementation processes of S303 and S304 are similar to that of S202. Details are not described herein again in embodiments of this application.

It may be understood that S301 to S304 are optional. In some cases, the at least one candidate function split manner and/or the fifth information may be further preconfigured on the CU, the DU, and/or the RU.

S305: The second function entity configures a communication function of the function entity in a default function split manner.

S306: The RU sends an RU status report to the DU.

It may be understood that implementation processes of S305 and S306 are similar to those of S203 and S204. Details are not described herein again in embodiments of this application.

S307: The DU sends a DU status report to the CU.

It may be understood that an implementation process of S307 is similar to that of S205. A difference lies in that the DU status report in S307 may include third information of the RU.

S308: The CU sends a CU status report to the third function entity.

It may be understood that an implementation process of S308 is similar to that of S206. A difference lies in that the CU status report in S308 may include the third information of the RU and third information of the DU.

S309: The third function entity replaces a second identifier with a first identifier.

S310: The third function entity sends the first identifier and first information to the first function entity.

S311: The first function entity determines a first target policy and/or a second target policy.

S312: The first function entity sends the target policy and the first identifier to the third function entity.

S313: The third function entity sends the target policy to the CU.

In some examples, the third function entity may further send the first identifier to the CU, for example, a real ID of the DU or a real ID of the RU.

S314: The CU sends the target policy to the DU.

For example, the CU may send the first target policy and/or the second target policy to the DU based on the real ID of the DU.

S315: The DU sends the target policy to the RU.

For example, the DU may send the second target policy to the RU based on the real ID of the RU.

It may be understood that implementation processes of S309 to S315 are similar to those of S207 to S211. Details are not described herein again in embodiments of this application.

S316: The second function entity configures the communication function of the function entity based on the target policy.

It may be understood that an implementation process of S316 is similar to that of S212. Details are not described herein again in embodiments of this application.

It may be understood that for specific implementation processes of S301 to S316, refer to the descriptions of the embodiments in FIG. 5 to FIG. 12. Details are not described herein again in embodiments of this application.

Certainly, for a case in which the third function entity is connected only to the DU or the RU, refer to the implementation process in Example B. A difference lies in that each second function entity needs to communicate with the third function entity via a second function entity connected to the third function entity.

In some embodiments, for the solution described in Example B, the CU may actually implement replacement of the real IDs of the RU and the DU. For example, the CU may be configured to implement mutual conversion between the real IDs and virtual IDs of the RU and the DU. In addition, the CU may be configured to configure the virtual IDs respectively corresponding to the RU and the DU. It may be understood that the third function entity may configure and replace only the real ID of the CU. In this case, the third function entity may further send the second identifier to the CU, for example, a virtual ID of the DU or a virtual ID of the RU, so that the CU sends a corresponding target policy to a real DU or RU based on the second identifier.

The embodiment described in Example B provides a method in which the first function entity obtains status information of each second function entity only from the CU via the third function entity, and performs function split. In this way, when real identity information of each second function entity is not exposed and there is only an interface with the CU, a network transmission status and a processor resource status can be obtained in real time, to flexibly split communication functions of different function entities, thereby meeting service traffic requirements, avoiding establishment of excessive interfaces, and reducing overall network operating overheads.

In the communication method provided in embodiments of this application, for a case in which the third function entity is integrated into the second function entity, refer to the implementation processes in FIG. 13A and FIG. 13B and FIG. 14. A difference is that the third function entity is integrated into a second function entity. For example, if the third function entity is integrated into the CU, sending and receiving information by the CU to and from the third function entity may be considered as data transmission inside the function entity. Details are not described herein in embodiments of this application.

In the communication method provided in embodiments of this application, it is considered that a future network node may not only have a transmission function, but also have an application service processing function, for example, training and inference of artificial intelligence (artificial intelligence, AI). Therefore, embodiments of this application are also applicable to splitting a computing function of an application server together with a RAN function and a core network function, and indicating the functions to different function entities. This is not limited in embodiments of this application.

It should be noted that the foregoing plurality of embodiments may be combined, and a combined solution is implemented. Optionally, some operations in procedures of the foregoing method embodiments are randomly combined, and/or a sequence of some operations is randomly changed. In addition, an execution sequence of steps of each procedure is merely an example, and does not constitute a limitation on an execution sequence of the steps. The steps may be performed in another execution sequence. This is not intended to indicate that the execution sequence is the only sequence in which these operations can be performed. A person of ordinary skill in the art may figure out a plurality of manners to reorder the operations described in this specification. In addition, it should be noted that process details related to a specific embodiment in this specification are also applicable to another embodiment in a similar manner, or different embodiments may be used in combination.

It may be understood that, to implement functions in the foregoing embodiments, the base station and the terminal include corresponding hardware structures and/or software modules for performing various functions. A person skilled in the art should be easily aware that, in embodiments of this application, the units and method steps in the examples described with reference to embodiments disclosed in embodiments of this application can be implemented by hardware or a combination of hardware and computer software. Whether a function is performed by hardware or hardware driven by computer software depends on particular application scenarios and design constraints of the technical solutions.

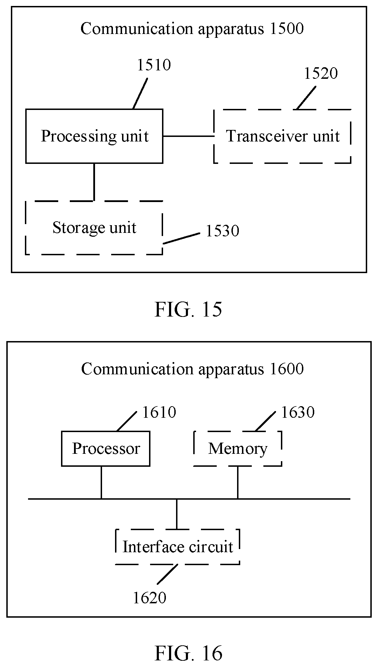

FIG. 15 and FIG. 16 are diagrams of structures of possible communication apparatuses according to embodiments of this application. These communication apparatuses may be configured to implement functions of any possible transmitter in the foregoing method embodiments. Therefore, beneficial effects of the foregoing method embodiments can also be implemented. In embodiments of this application, the communication apparatus may be a third function entity, or may be a module used in the third function entity, for example, a chip.

As shown in FIG. 15, the communication apparatus 1500 includes a processing unit 1510.

In a possible implementation, the communication apparatus 1500 may further include a transceiver unit 1520.

In a possible implementation, the communication apparatus 1500 may further include a storage unit 1530.

In a possible implementation, the communication apparatus 1500 may further include a transceiver unit 1520 and a storage unit 1530.

The communication apparatus 1500 is configured to implement functions of the third function entity in the method embodiments shown in FIG. 5, FIG. 13A and FIG. 13B, and FIG. 14.

When the communication apparatus 1500 is configured to implement the functions of the third function entity in the method embodiment shown in FIG. 5, the transceiver unit 1520 is configured to receive a first target policy and/or a second target policy; the transceiver unit 1520 is further configured to send, based on an association relationship between a first identifier and a second identifier, the first target policy and/or the second target policy to a second function entity indicated by the second identifier; the processing unit 1510 is configured to: perform all operations performed by the communication apparatus 1500 except receiving and sending operations in the embodiment shown in FIG. 5, and/or support another process of the technology described in this specification; and the storage unit 1530 is configured to store any data, computer instructions, and/or a computer program that may be involved in embodiments of this application.

For more detailed descriptions of the processing unit 1510 and the transceiver unit 1520, refer to related descriptions in the method embodiments shown in FIG. 5, FIG. 13A and FIG. 13B, and FIG. 14. The processing unit 1510 and the transceiver unit 1520 may further perform another step. For a specific implementation, refer to the method embodiments. Details are not described herein again.

Optionally, the transceiver unit 1520 may be a transceiver. The transceiver may include an antenna, a radio frequency circuit, and the like.

The processing unit 1510 may be a processor (or a processing circuit), for example, a baseband processor. The baseband processor may include one or more CPUs.

As shown in FIG. 16, the communication apparatus 1600 includes at least one processor 1610. In a possible implementation, the communication apparatus 1600 may further include an interface circuit 1620.

In a possible implementation, the communication apparatus 1600 may further include a memory 1630.

In a possible implementation, the communication apparatus 1600 may further include a memory 1630 and an interface circuit 1620.

In some embodiments, the processor 1610 and the memory 1630 are coupled to each other; and/or the processor 1610 and the interface circuit 1620 are coupled to each other. It may be understood that the interface circuit 1620 may be a transceiver or an input/output interface. The memory 1630 may be configured to: store computer instructions to be executed by the processor 1610, store input data needed for running the computer instructions by the processor 1610, or store data generated after the processor 1610 runs the computer instructions.

When the communication apparatus 1600 is configured to implement the methods shown in FIG. 5, FIG. 13A and FIG. 13B, and FIG. 14, the processor 1610 may be configured to implement a function of the processing unit 1510, and/or the interface circuit 1620 may be configured to implement a function of the transceiver unit 1520, and/or the memory 1630 may be configured to implement a function of the storage unit 1530.

The communication apparatus shown in FIG. 15 or FIG. 16 is merely an example. In an actual application, the communication apparatus may have more or fewer components than those shown in FIG. 15 or FIG. 16, may combine two or more components, or may have different component configurations.

In embodiments of this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives the information sent by the entity A via another entity. The entities A and B herein each may be a RAN node or a terminal, or may be a module in a RAN node or a terminal. Information sending and receiving may be information exchange between a RAN node and a terminal, for example, information exchange between a network device and a terminal. Alternatively, information sending and receiving may be information exchange between two RAN nodes, for example, information exchange between a CU and a DU. Alternatively, information sending and receiving may be information exchange between different modules in an apparatus, for example, information exchange between a chip in a terminal and another module in the terminal, or information exchange between a chip in a network device and another module in the network device.

In embodiments of this application, the network device sends a downlink signal or downlink information to the terminal device, where the downlink information is carried on a downlink channel; and the terminal device sends an uplink signal or uplink information to the network device, where the uplink information is carried on an uplink channel. The terminal device needs to establish a wireless connection to a cell controlled by the network device, to communicate with the network device. The cell that establishes the wireless connection to the terminal device is referred to as a serving cell of the terminal device.

It may be understood that, in embodiments of this application, a physical downlink shared channel (physical downlink shared channel, PDSCH) and a physical uplink shared channel (physical uplink shared channel, PUSCH) are merely examples of a downlink data channel and an uplink data channel. In different systems and different scenarios, the data channel and the control channel may have different names. This is not limited in embodiments of this application.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Alternatively, the storage medium may be a component of the processor. The processor and the storage medium may be disposed in an ASIC. In addition, the ASIC may be located in the network device or the terminal. Alternatively, the processor and the storage medium may exist in a network device or a terminal as discrete components.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or a logical conflict occurs, terms and/or descriptions between different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
receiving a first target policy and/or a second target policy and a first identifier from a first function entity, wherein the first target policy indicates a communication function split manner of a first target entity and a second target entity, and the second target policy indicates a communication function split manner of the second target entity and a third target entity; and
sending, based on an association relationship between the first identifier and a second identifier, the first target policy and/or the second target policy to a second function entity indicated by the second identifier, wherein the second function entity comprises at least one of the first target entity, the second target entity, and the third target entity.

2. The method according to claim 1, wherein before receiving the first target policy and/or the second target policy from the first function entity, the method further comprises:
obtaining the second identifier and first information corresponding to the second identifier;
mapping the second identifier to the first identifier based on the association relationship between the second identifier and the first identifier; and
sending the first identifier and the first information to the first function entity, wherein
the first information comprises at least one of the following:
second information corresponding to communication interfaces, wherein the second information indicates a network communication status corresponding to the communication interface, the communication interfaces comprise a first interface and a second interface, the first interface is a communication interface between the first target entity and the second target entity, and the second interface is a communication interface between the second target entity and the third target entity;
third information corresponding to the second function entity, wherein the third information indicates a processing resource status corresponding to the second function entity; or
fourth information, wherein the fourth information indicates a quality of service QoS requirement corresponding to at least one service.

3. The method according to claim 1 or 2, wherein the method further comprises:
assigning the first identifier associated with the second identifier.

4. The method according to any one of claims 1 to 3, wherein the second identifier is from at least one second function entity.

5. The method according to any one of claims 1 to 4, wherein the first target policy and/or the second target policy correspond/corresponds to any one of different terminals;
the first target policy and/or the second target policy correspond/corresponds to any one of different protocol data unit PDU sessions;
the first target policy and/or the second target policy correspond/corresponds to any one of different QoS flows;
the first target policy and/or the second target policy correspond/corresponds to any one of different data radio bearers DRBs; or
the first target policy and/or the second target policy correspond/corresponds to any one of different data packets.

6. The method according to any one of claims 1 to 5, wherein the method further comprises:
receiving at least one candidate function split manner and/or fifth information, wherein the fifth information indicates a communication function configured for each second function entity corresponding to the candidate function split manner; and
sending the at least one candidate function split manner and/or the fifth information to the second function entity.

7. The method according to any one of claims 1 to 6, wherein communication with different second function entities is performed through transmission transparent to an intermediate node.

8. The method according to any one of claims 1 to 7, wherein the method is applied to a third function entity, and the third function entity, the first function entity, and the second function entity are function entities that are independent of each other; or the third function entity is integrated into the second function entity.

9. The method according to claim 8, wherein the third function entity is communicatively connected to the at least one second function entity.

10. The method according to any one of claims 1 to 9, wherein the second function entity is a function entity in a wireless local area network RAN, a core network, or a network management domain.

11. The method according to claim 10, wherein the second function entity is the function entity in the RAN, and the second function entity comprises at least one of the following function entities:
a central unit CU,
a distributed unit DU, or
a radio unit RU.

12. The method according to any one of claims 1 to 10, wherein the method is applied to a CU, and the second function entity comprises a DU and/or an RU;
the method is applied to a DU, and the second function entity comprises a CU and/or an RU; or
the method is applied to an RU, and the second function entity comprises a CU and/or a DU.

13. The method according to any one of claims 1 to 12, wherein the communication function split manner comprises a manner of splitting a set formed by at least one of the following communication functions:
a communication function corresponding to a RAN protocol layer,
a communication function corresponding to one or more network elements in a core network, or
a communication function corresponding to at least one network management entity.

14. The method according to claim 2, wherein the second information comprises at least one of the following parameters:
a bandwidth resource of the communication interface,
a transmission delay of the communication interface,
a packet loss rate of the communication interface, or
reliability of the communication interface.

15. The method according to claim 2, wherein the third information comprises at least one of the following parameters:
processor utilization,
memory utilization, or
disk utilization.

16. The method according to claim 2, wherein the fourth information comprises at least one of the following parameters:
a packet delay budget PDB,
a guaranteed bit rate GBR, or
a packet error rate PER.

17. The method according to any one of claims 1 to 16, wherein the communication function comprises at least one of the following states:
an active state, or
an inactive state.

18. A communication system, comprising a first function entity and a third function entity, wherein
the first function entity is configured to send a first target policy and/or a second target policy and a first identifier to the third function entity, wherein the first target policy indicates a communication function split manner of a first target entity and a second target entity, and the second target policy indicates a communication function split manner of the second target entity and a third target entity; and
the third function entity is configured to send, based on an association relationship between the first identifier and a second identifier, the first target policy and/or the second target policy to a second function entity indicated by the second identifier, wherein the second function entity comprises at least one of the first target entity, the second target entity, and the third target entity.

19. The system according to claim 18, wherein the system further comprises the second function entity;
the second function entity is configured to send the second identifier and first information corresponding to the second identifier to the third function entity;
the third function entity is further configured to map the second identifier to the first identifier based on the association relationship between the second identifier and the first identifier; and
the third function entity sends the first identifier and the first information to the first function entity, wherein
the first information comprises at least one of the following:
second information corresponding to communication interfaces, wherein the second information indicates a network communication status corresponding to the communication interface, the communication interfaces comprise a first interface and a second interface, the first interface is a communication interface between the first target entity and the second target entity, and the second interface is a communication interface between the second target entity and the third target entity;
third information corresponding to the second function entity, wherein the third information indicates a processing resource status corresponding to the second function entity; or
fourth information, wherein the fourth information indicates a quality of service QoS requirement corresponding to at least one service.

20. The system according to claim 18 or 19, wherein the third function entity is further configured to:
assign the first identifier associated with the second identifier.

21. The system according to any one of claims 18 to 20, wherein the second identifier is from at least one second function entity.

22. The system according to any one of claims 18 to 21, wherein the first target policy and/or the second target policy correspond/corresponds to any one of different terminals;
the first target policy and/or the second target policy correspond/corresponds to any one of different protocol data unit PDU sessions;
the first target policy and/or the second target policy correspond/corresponds to any one of different QoS flows;
the first target policy and/or the second target policy correspond/corresponds to any one of different data radio bearers DRBs; or
the first target policy and/or the second target policy correspond/corresponds to any one of different data packets.

23. The system according to any one of claims 18 to 22, wherein
the first function entity is further configured to send at least one candidate function split manner and/or fifth information to the third function entity, wherein the fifth information indicates a communication function configured for each second function entity corresponding to the candidate function split manner; and
the third function entity is further configured to send the at least one candidate function split manner and/or the fifth information to the second function entity.

24. The system according to any one of claims 18 to 23, wherein the third function entity communicates with different second function entities through transmission transparent to an intermediate node.

25. The system according to any one of claims 18 to 24, wherein the third function entity, the first function entity, and the second function entity are function entities that are independent of each other; or the third function entity is integrated into the second function entity.

26. The system according to claim 25, wherein the third function entity is communicatively connected to the at least one second function entity.

27. The system according to any one of claims 18 to 26, wherein the second function entity is a function entity in a wireless local area network RAN, a core network, or a network management domain.

28. The system according to claim 27, wherein the second function entity is the function entity in the RAN, and the second function entity comprises at least one of the following function entities:
a central unit CU,
a distributed unit DU, or
a radio unit RU.

29. The system according to any one of claims 18 to 27, wherein the third function entity is a CU, and the second function entity comprises a DU and/or an RU;
the third function entity is a DU, and the second function entity comprises a CU and/or an RU; or
the third function entity is an RU, and the second function entity comprises a CU and/or a DU.

30. The system according to any one of claims 18 to 29, wherein the communication function split manner comprises a manner of splitting a set formed by at least one of the following communication functions:
a communication function corresponding to a RAN protocol layer,
a communication function corresponding to one or more network elements in a core network, or
a communication function corresponding to at least one network management entity.

31. The system according to claim 19, wherein the second information comprises at least one of the following parameters:
a bandwidth resource of the communication interface,
a transmission delay of the communication interface,
a packet loss rate of the communication interface, or
reliability of the communication interface.

32. The system according to claim 19, wherein the third information comprises at least one of the following parameters:
processor utilization,
memory utilization, or
disk utilization.

33. The system according to claim 19, wherein the fourth information comprises at least one of the following parameters:
a packet delay budget PDB,
a guaranteed bit rate GBR, or a packet error rate PER.

34. The system according to any one of claims 18 to 22, wherein the communication function comprises at least one of the following states:
an active state, or
an inactive state.

35. A communication apparatus, comprising a processing module and a communication module, wherein
the communication module is configured to: receive and/or send a signal, and the processing module is configured to enable the method according to any one of claims 1 to 17 to be performed.

36. A communication apparatus, comprising at least one processor and a communication interface, wherein the communication interface is configured to: receive and/or send a signal, and the processor is configured to enable the method according to any one of claims 1 to 17 to be performed.

37. A communication apparatus, comprising at least one processor and a memory, wherein the memory is configured to store computer instructions, and the processor is configured to execute the computer instructions, to enable the communication apparatus to perform the method according to any one of claims 1 to 17.

38. A computer-readable storage medium, wherein the computer-readable storage medium stores instructions or a program, and when the instructions or the program runs on a communication apparatus, the communication apparatus is enabled to perform the method according to any one of claims 1 to 17.

39. A computer program product, wherein the computer program product comprises a computer program or instructions, and when the computer program or the instructions are run on a computer, the computer is enabled to perform the method according to any one of claims 1 to 17.
